# EUROPEAN PATENT SPECIFICATION

(11) **EP 2 765 870 B1**
(45) Date of publication and mention of the grant of the patent: **03.10.2018**
(21) Application number: 12750682.2
(22) Date of filing: 15.08.2012
(51) Int. Cl.: A23P 10/35, A23L 33/00, A23L 33/105, A23L 33/12, A23L 33/135, A23L 33/16, A23L 33/19

(54) **NUTRITIONAL PHYTONUTRIENT COMPOSITIONS**
NAHRHAFTE PHYTONÄHRSTOFFZUSAMMENSETZUNGEN
COMPOSITIONS NUTRITIONELLES DE PHYTONUTRIMENTS

(30) Priority: 14.10.2011 US 201113273635
(43) Date of publication of application: 20.08.2014
(73) Proprietor: MJN U.S. Holdings LLC, Chicago, Illinois 60606 (US)
(72) Inventor: JOUNI, Zeina,, Evansville, Indiana 47725 (US); CEVALLOS, Bolivar,, Newburgh, Indiana 47630 (US); HORIA, Eva,, Bangkok 10900 (TH); HARTHOORN, Lucien,, NL-3446 AG Woerden (NL); KINEMAN, Brian,, Florham Park, New Jersey 07932 (US); GAYGADZHIEV, Zafir,, Evansville, Indiana 47715 (US); TALLEY, Kelli,, Evansville, Indiana 47725 (US)
(74) Representative: Gill-Carey, Michael
(86) International application number: PCT/US2012/050912
(87) International publication number: WO 2013/055439

(56) References cited:
- EP-A1- 0 622 024
- WO-A1-2007/039596
- WO-A1-2010/124997
- WO-A2-2007/084754
- US-A1- 2006 210 697
- US-A1- 2007 116 802
- US-A1- 2010 104 545
- PRIOR R L ET AL: "Occurrence and biological significance of proanthocyanidins in the American diet", PHYTOCHEMISTRY, PERGAMON PRESS, GB, vol. 66, no. 18, 1 September 2005 (2005-09-01), pages 2264-2280, XP027726829, ISSN: 0031-9422 [retrieved on 2005-09-01]
- WU ET AL: "Chemical compositional characterization of some apple cultivars", FOOD CHEMISTRY, ELSEVIER LTD, NL, vol. 103, no. 1, 20 February 2007 (2007-02-20), pages 88-93, XP005897891, ISSN: 0308-8146, DOI: 10.1016/J.FOODCHEM.2006.07.030
- FELICIANO R P ET AL: "Characterization of traditional and exotic apple varieties from Portugal. Part 1 @? Nutritional, phytochemical and sensory evaluation", JOURNAL OF FUNCTIONAL FOODS, ELSEVIER BV, NL, vol. 2, no. 1, 1 January 2010 (2010-01-01) , pages 35-45, XP026934551, ISSN: 1756-4646, DOI: 10.1016/J.JFF.2009.12.004 [retrieved on 2010-02-04]

## Description

### TECHNICAL FIELD

The present disclosure relates to milk-based nutritional compositions for pediatric subjects and to corresponding methods of using the nutritional compositions to promote health and development. More specifically, the present disclosure relates to children's nutritional products, especially growing-up milks, comprising docosahexaenoic acid, choline, and phytonutrients, particularly apple extract, and grape seed extract. The nutritional compositions are believed to be useful in promoting visual health, gastrointestinal health, immune function and cognitive development and function in infants and children, and they may be delivered via a staged nutritional feeding regimen. The disclosure further relates to nutritional compositions that maintain desirable organoleptic properties after addition of phytonutrients to a milk-based matrix and still further relates to methods for producing the same.

### BACKGROUND ART

The U.S. Department of Agriculture recommends that healthy Americans eat between five and ten servings of fruits and vegetables per day; however, few people consume these recommended quantities of produce. Indeed, fewer than 7% of U.S. school children consume the recommended minimum five daily servings of fruits and vegetables. One of the drawbacks of a diet lacking in fruits and vegetables is a lack of phytonutrients, which are desirable for complete nutrition.

To date, dietary interventions have been only modestly successful in increasing fruit and vegetable intake among children (Nanney MS, et al., 2005 Nutr. J, 4:34-40). Moreover, global trends indicate that fruit and vegetable intake is decreasing among children worldwide. Therefore, a dietary gap exists in many children's diets with regard to phytonutrients. Accordingly, then, a need exists in the art for incorporation of supplemental nutrients, such as plant extracts, into the diets of pediatric subjects in order to reduce or eliminate the dietary gap.

Phytonutrients are plant-derived bioactive compounds that have been associated with various health benefits in adults, including antioxidant activity, improved cardiovascular health, anti-inflammation, anti-aging, and neurological benefits. Likewise, polyphenols, including flavonoids, have been positively linked to brain benefits and improved memory and learning behaviors in adults. Despite these potential benefits, phytonutrients are not often used to supplement food products because most phytonutrients contribute undesirable color and/or tastes when added to existing nutritional products.

For example, in the past, applications of anthocyanins as food colorants have been limited due to the color instability of anthocyanins during processing and/or storage in food or beverage systems over time. The color of anthocyanin is affected by many factors. Notably, the structure of anthocyanins reversibly changes at different pH. In general, the red flavylium cation (the most stable structure) predominates at pH below 2.5-3, and the blue quinoidal base forms at pH above 5 (Clifford MN. 2000. Anthocyanins - nature, occurrence and dietary burden. J Sci Food Agric 80:1063-1072). Therefore, anthocyanins often produce unwelcome color changes in nutritional compositions during reconstitution, sterilization or consumption.
WO2010/124997 A1 discloses A nutritional composition comprising an apple extract and reducing food allergy symptoms, especially in children
US2010/104545 A1 discloses as nutritionally complete infant formula for healthy growth.
US2007/116802 A1 discloses a high quality caloric composition.

As such, it would be beneficial to provide a nutritional composition that may be supplemented with phytonutrients, such as flavonoids, to promote general health and development and to address the dietary gap in pediatric subjects, wherein the nutritional composition maintains desirable organoleptic properties after the addition of the phytonutrients and throughout the life of the product.

### DISCLOSURE OF THE INVENTION

In a first aspect of the invention there is provided a nutriotional composition according to claim 1.

In a second aspect, the disclosure is directed to a staged nutritional feeding regimen for a pediatric subject that includes a plurality of different nutritional compositions, based on the compositions of the first aspect of the disclosure nutritional compositions of the feeding regimen includes a source of long chain polyunsaturated fatty acid, at least one prebiotic, an iron source, a source of β-glucan, and may also comprise vitamins or minerals, lutein, and/or zeaxanthin.

The staged nutritional feeding regimen of the present disclosure includes the step(s) of:
(a) administering to a pediatric subject that is less than about three months of age a first composition that comprises a composition of the first aspect of the invention:
   and further comprises
   a phytonutrient component selected from the group consisting of
      between about 0.01 and 30 mg flavan-3-ols;
      between about 0.01 and 20 mg flavanones;
      between about 0.01 and 20 mg flavonols;
      between about 0.01 and 20 mg isoflavones;
      between about 0.01 and 50 mg anthocyanins;
      between about 0.01 and 120 mg proanthocyanidins; and
      any mixture thereof,
(b) administering to a pediatric subject between about three and about 12 months of age a second composition that comprises a composition of the first aspect of the invention and further comprising:
   a phytonutrient component selected from the group consisting of
   between about 0.1 and 50 mg flavan-3-ols;
   between about 0.1 and 40 mg flavanones;
   between about 0.1 and 40 mg flavonols;
   between about 0.1 and 40 mg isoflavones;
   between about 0.1 and 70 mg anthocyanins;
   between about 0.1 and 170 mg proanthocyanidins; and
   any mixture thereof,
(c) administering to a pediatric subject between about one and about two years of age a third composition comprises a composition of the first aspect of the invention and further comprising:
   a phytonutrient component selected from the group consisting of
   between about 0.1 and 150 mg flavan-3-ols;
   between about 0.1 and 60 mg flavanones;
   between about 0.1 and 60 mg flavonols;
   between about 0.1 and 60 mg isoflavones;
   between about 0.1 and 80 mg anthocyanins;
   between about 0.1 and 250 mg proanthocyanidins; and
   any mixture thereof,
(d) administering to a pediatric subject between about two and about three years of age a fourth composition that comprises comprises a composition of the first aspect of the invention and further comprising:
   a phytonutrient component selected from the group consisting of
   between about 0.1 and 225 mg flavan-3-ols;
   between about 0.1 and 130 mg flavanones;
   between about 0.1 and 130 mg flavonols;
   between about 0.1 and 130 mg isoflavones;
   between about 0.1 and 125 mg anthocyanins;
   between about 0.1 and 350 mg proanthocyanidins; and
   any mixture thereof, and/or
(e) administering to a pediatric subject between about three and about twelve years of age a fifth composition that comprises a composition of the first aspect of the invention and further comprising:
   a phytonutrient component selected from the group consisting of
   between about 0.1 and 240 mg flavan-3-ols;
   between about 0.1 and 150 mg flavanones;
   between about 0.1 and 150 mg flavonols;
   between about 0.1 and 150 mg isoflavones;
   between about 0.1 and 150 mg anthocyanins;
   between about 0.1 and 400 mg proanthocyanidins; and
   any mixture thereof.

It is to be understood that both the foregoing general description and the following detailed description present embodiments of the disclosure and are intended to provide an overview or framework for understanding the nature and character of the disclosure as it is claimed. The description serves to explain the principles and operations of the claimed subject matter.

### BEST MODE FOR CARRYING OUT THE INVENTION

Reference now will be made in detail to the embodiments of the present disclosure, one or more examples of which are set forth herein below. Each example is provided by way of explanation of the nutritional composition of the present disclosure and is not a limitation.

"Nutritional composition" means a substance or formulation that satisfies at least a portion of a subject's nutrient requirements. The terms "nutritional(s)", "nutritional formula(s)", "enteral nutritional(s)", "nutritional composition(s)", and "nutritional supplement(s)" are used interchangeably throughout the present disclosure to refer to liquids, powders, gels, pastes, solids, concentrates, suspensions, or ready-to-use forms of enteral formulas, oral formulas, formulas for infants, formulas for pediatric subjects, formulas for children, growing-up milks and/or formulas for adults.

The term "enteral" means deliverable through or within the gastrointestinal, or digestive, tract. "Enteral administration" includes oral feeding, intragastric feeding, transpyloric administration, or any other administration into the digestive tract. "Administration" is broader than "enteral administration" and includes parenteral administration or any other route of administration by which a substance is taken into a subject's body.

"Pediatric subject" means a human that is less than 13 years of age. In some embodiments, a pediatric subject refers to a human subject that is less than 8 years old. In other embodiments, a pediatric subject refers to a human subject between 1 and 6 years of age. In still further embodiments, a pediatric subject refers to a human subject between 6 and 12 years of age.

"Infant" means a subject ranging in age from birth to not more than about one year and includes infants from 0 to about 12 months. The term infant includes low birth weight infants, very low birth weight infants, and preterm infants. "Preterm" means an infant born before the end of the 37^{th} week of gestation.

"Child" means a subject ranging in age from about 12 months to about 13 years. In some embodiments, a child is a subject between the ages of 1 and 12 years old. In other embodiments, the terms "children" or "child" refer to subjects that are between about one and about six years old, or between about seven and about 12 years old. In other embodiments, the terms "children" or "child" refer to any range of ages between about 12 months and about 13 years.

"Children's nutritional product" refers to a composition that satisfies at least a portion of the nutrient requirements of a child. A growing-up milk is an example of a children's nutritional product.

"Infant formula" means a composition that satisfies at least a portion of the nutrient requirements of an infant. In the United States, the content of an infant formula is dictated by the federal regulations set forth at 21 C.F.R. Sections 100, 106, and 107. These regulations define macronutrient, vitamin, mineral, and other ingredient levels in an effort to simulate the nutritional and other properties of human breast milk.

The term "growing-up milk" refers to a broad category of nutritional compositions intended to be used as a part of a diverse diet in order to support the normal growth and development of a child between the ages of about 1 and about 6 years of age.

"Milk-based" means comprising at least one component that has been drawn or extracted from the mammary gland of a mammal. In some embodiments, a milk-based nutritional composition comprises components of milk that are derived from domesticated ungulates, ruminants or other mammals or any combination thereof. Moreover, in some embodiments, milk-based means comprising bovine casein, whey, lactose, or any combination thereof. Further, "milk-based nutritional composition" may refer to any composition comprising any milk-derived or milk-based product known in the art.

"Nutritionally complete" means a composition that may be used as the sole source of nutrition, which would supply essentially all of the required daily amounts of vitamins, minerals, and/or trace elements in combination with proteins, carbohydrates, and lipids. Indeed, "nutritionally complete" describes a nutritional composition that provides adequate amounts of carbohydrates, lipids, essential fatty acids, proteins, essential amino acids, conditionally essential amino acids, vitamins, minerals and energy required to support normal growth and development of a subject.

Therefore, a nutritional composition that is "nutritionally complete" for a preterm infant will, by definition, provide qualitatively and quantitatively adequate amounts of carbohydrates, lipids, essential fatty acids, proteins, essential amino acids, conditionally essential amino acids, vitamins, minerals, and energy required for growth of the preterm infant.

A nutritional composition that is "nutritionally complete" for a term infant will, by definition, provide qualitatively and quantitatively adequate amounts of all carbohydrates, lipids, essential fatty acids, proteins, essential amino acids, conditionally essential amino acids, vitamins, minerals, and energy required for growth of the term infant.

A nutritional composition that is "nutritionally complete" for a child will, by definition, provide qualitatively and quantitatively adequate amounts of all carbohydrates, lipids, essential fatty acids, proteins, essential amino acids, conditionally essential amino acids, vitamins, minerals, and energy required for growth of a child.

As applied to nutrients, the term "essential" refers to any nutrient that cannot be synthesized by the body in amounts sufficient for normal growth and to maintain health and that, therefore, must be supplied by the diet. The term "conditionally essential" as applied to nutrients means that the nutrient must be supplied by the diet under conditions when adequate amounts of the precursor compound is unavailable to the body for endogenous synthesis to occur.

"Probiotic" means a microorganism with low or no pathogenicity that exerts a beneficial effect on the health of the host.

"Prebiotic" means a non-digestible food ingredient that beneficially affects the host by selectively stimulating the growth and/or activity of one or a limited number of bacteria in the digestive tract that can improve the health of the host.

"Phytonutrient" means a chemical compound that occurs naturally in plants, and phytonutrients may be included in any plant-derived substance or extract. The term "phytonutrient(s)" encompasses several broad categories of compounds produced by plants, such as, for example, polyphenolic compounds, anthocyanins, proanthocyanidins, and flavan-3-ols (i.e. catechins, epicatechins), and may be derived from, for example, fruit, seed or tea extracts. Further, the term phytonutrient includes all carotenoids, phytosterols, thiols, and other plant-derived compounds. Moreover, as a skilled artisan will understand, plant extracts may include phytonutrients, such as polyphenols, in addition to protein, fiber or other plant-derived components. Thus, for example, apple or grape seed extract(s) may include beneficial phytonutrient components, such as polyphenols, in addition to other plant-derived substances.

"β-glucan" means all β-glucan, including specific types of β-glucan, such as β-1,3-glucan or β-1,3;1,6-glucan. Moreover, β-1,3;1,6-glucan is a type of β-1,3-glucan. Therefore, the term "β-1,3-glucan" includes β-1,3;1,6-glucan.

All percentages, parts and ratios as used herein are by weight of the total formulation, unless otherwise specified.

All amounts specified as administered "per day" may be delivered in one unit dose, in a single serving or in two or more doses or servings administered over the course of a 24 hour period.

The nutritional composition of the present disclosure may be substantially free of any optional or selected ingredients described herein, provided that the remaining nutritional composition still contains all of the required ingredients or features described herein. In this context, and unless otherwise specified, the term "substantially free" means that the selected composition may contain less than a functional amount of the optional ingredient, typically less than 0.1% by weight, and also, including zero percent by weight of such optional or selected ingredient.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The methods and compositions of the present disclosure, including components thereof, can comprise, consist of, or consist essentially of the essential elements and limitations of the embodiments described herein, as well as any additional or optional ingredients, components or limitations described herein or otherwise useful in nutritional compositions.

As used herein, the term "about" should be construed to refer to both of the numbers specified as the endpoint(s) of any range. Any reference to a range should be considered as providing support for any subset within that range.

Moreover, color change is described throughout the present disclosure via the CIE "Lab" scale, as is known in the art. The "Lab" scale utilizes a three-dimensional graph with axes "L", "a" and "b" all crossing at point 0.00. The "L" value measures lightness (100.00) to darkness (0.00). The "a" value measures red when the result is a positive number, gray when 0.00 and green when the result is negative. The "b" value measures yellow when the result is a positive number, gray when 0.00 and blue when the result is negative. The term "hue" refers to specific color, and "chroma" refers to color intensity.

The present disclosure is directed to a nutritional compositions as defined in claim 1.

The nutritional composition supports general health and development, optimal cognitive development and health, gastrointestinal development and health, and immune function and development in a human subject, such as an infant (preterm and term) or a child. Moreover, the incorporation of phytonutrients in the nutritional composition of the present disclosure imparts many health benefits to the targeted population. For example, phytonutrients promote vascular health by improving blood flow to the brain, enhance cognitive function, promote bone health, promote various antioxidant activities, modulate metabolic pathways involved in anti-inflammatory activity, improve vision, and provide anti-obesity benefits. Further, some carotenoids and polyphenols work synergistically with docosahexaenoic acid to impart several of these benefits.

The disclosed nutritional composition(s) may be provided in any form known in the art, such as a powder, a gel, a suspension, a paste, a solid, a liquid, a liquid concentrate, a reconstituteable powdered milk substitute or a ready-to-use product. The nutritional composition may, in certain embodiments, comprise a nutritional supplement, children's nutritional product, infant formula, human milk fortifier, growing-up milk or any other nutritional composition designed for an infant or a pediatric subject. Nutritional compositions of the present disclosure include, for example, orally-ingestible, health-promoting substances including, for example, foods, beverages, tablets, capsules and powders. Moreover, the nutritional composition of the present disclosure may be standardized to a specific caloric content, it may be provided as a ready-to-use product, or it may be provided in a concentrated form. In some embodiments, the nutritional composition is in powder form with a particle size in the range of 5 µm to 1500 µm, more preferably in the range of 10 µm to 300µm.

Phytonutrients, or their derivatives, conjugated forms or precursors, that are identified in human milk are preferred for inclusion in the nutritional composition. Typically, dietary sources of carotenoids and polyphenols are absorbed by a nursing mother and retained in milk, making them available to nursing infants. Addition of these phytonutrients to infant or children's formulas allows such formulas to mirror the composition and functionality of human milk and to promote general health and well being.

For example, in some embodiments, the nutritional composition of the present disclosure may comprise, in an 8 fl. oz. (236.6 mL) serving, between about 80 and about 300 mg anthocyanins, between about 100 and about 600 mg proanthocyanidins, between about 50 and about 500 mg flavan-3-ols, or any combination or mixture thereof.

In some embodiments, the disclosure provides a fortified milk-based growing-up milk designed for children ages about 1 to 3 years and/or about 4 to 6 years, wherein the growing-up milk supports growth and development and life-long health.

For the purposes of this disclosure, phytonutrients may be added to a nutritional composition in native, purified, encapsulated and/or chemically or enzymatically-modified form so as to deliver the desired sensory and stability properties. In the case of encapsulation, it is desirable that the encapsulated phytonutrients resist dissolution with water but are released upon reaching the small intestine. This could be achieved by the application of enteric coatings, such as cross-linked alginate and others.

Examples of phytonutrients suitable for the nutritional composition include, but are not limited to, anthocyanins, proanthocyanidins, flavan-3-ols (i.e.. catechins, epicatechins, etc.), flavanones, flavonoids, isoflavonoids, stilbenoids (i.e. resveratrol, etc.)proanthocyanidins, anthocyanins, resveratrol, quercetin, curcumin, and/or any mixture thereof, as well as any possible combination of phytonutrients in a purified or natural form. Certain components, especially plant-based components of the nutritional compositions may provide a source of phytonutrients.

Some amounts of phytonutrients may be inherently present in known ingredients, such as natural oils, that are commonly used to make nutritional compositions for pediatric subjects. These inherent phytonutrient(s) may be but are not necessarily considered part of the phytonutrient component described in the present disclosure. In some embodiments, the phytonutrient concentrations and ratios as described herein are calculated based upon added and inherent phytonutrient sources. In other embodiments, the phytonutrient concentrations and ratios as described herein are calculated based only upon added phytonutrient sources.

Indeed, it has been found that nutritional compositions may be formulated with higher amounts of phytonutrients than are commonly found in pediatric nutritional compositions and that these additional phytonutrients provide health benefits not previously known or appreciated in the art. Accordingly, the nutritional compositions of the present disclosure preferably comprise at least 25%, more preferably from about 50% to about 99%, by weight of total phytonutrients as added phytonutrients, the remainder being inherent phytonutrients that accompany addition of known ingredients, such as added natural oils.

In some embodiments, the nutritional composition comprises anthocyanins, such as, for example, glucosides of aurantinidin, cyanidin, delphinidin, europinidin, luteolinidin, pelargonidin, malvidin, peonidin, petunidin, and rosinidin. These and other anthocyanins suitable for use in the nutritional composition are found in a variety of plant sources. Anthocyanins may be derived from a single plant source or a combination of plant sources. Non-limiting examples of plants rich in anthocyanins suitable for use in the inventive composition include: berries (acai, grape, bilberry, blueberry, lingonberry, black currant, chokeberry, blackberry, raspberry, cherry, red currant, cranberry, crowberry, cloudberry, whortleberry, rowanberry), purple corn, purple potato, purple carrot, red sweet potato, red cabbage, eggplant.

A nutritional composition prepared for a subject between the ages of birth and about three months may be formulated to deliver between about 0.01 and about 50 mg anthocyanins per day or between about 1 and about 5 mg anthocyanins per day. A nutritional composition prepared for a subject between the ages of about three and about 12 months may be formulated to deliver between about 0.1 and about 70 mg anthocyanins per day or between about 2 and about 10 mg anthocyanins per day. A nutritional composition prepared for a subject between the ages of about one and about two years may be formulated to deliver between about 0.1 and about 80 mg anthocyanins per day or between about 4 and about 18 mg anthocyanins per day. A nutritional composition prepared for a subject between the ages of about two and about three years may be formulated to deliver between about 0.1 and about 125 mg anthocyanins per day or between about 6 and about 30 mg anthocyanins per day. And a nutritional composition prepared for a subject between the ages of about three and about twelve years may be formulated to deliver between about 0.1 and about 150 mg anthocyanins per day or between about 8 and about 50 mg anthocyanins per day.

The nutritional composition of the present disclosure comprises proanthocyanidins, which include but are not limited to flavan-3-ols and polymers of flavan-3-ols (e.g., catechins, epicatechins) with degrees of polymerization in the range of 2 to 11. Such compounds are derived from a combination of plant sources. Non-limiting examples of plant sources rich in proanthocyanidins suitable for use in the inventive nutritional composition include: grape, grape skin, grape seed, green tea, black tea, apple, pine bark, cinnamon, cocoa, bilberry, cranberry, black currant chokeberry.

In some embodiments, a nutritional composition prepared for a subject between the ages of birth and about three months may be formulated to deliver between about 0.01 and about 120 mg proanthocyanidins per day or between about 5 and about 50 mg proanthocyanidins per day. A nutritional composition prepared for a subject between the ages of about three and about 12 months may be formulated to deliver between about 0.1 and about 170 mg proanthocyanidins per day or between about 10 and about 80 mg proanthocyanidins per day. A nutritional composition prepared for a subject between the ages of about one and about two years may be formulated to deliver between about 0.1 and about 250 mg proanthocyanidins per day or between about 20 and about 120 mg proanthocyanidins per day. A nutritional composition prepared for a subject between the ages of about two and about three years may be formulated to deliver between about 0.1 and about 350 mg proanthocyanidins per day or between about 30 and about 175 mg proanthocyanidins per day. And a nutritional composition prepared for a subject between the ages of about three and about twelve years may be formulated to deliver between about 0.1 and about 400 mg proanthocyanidins per day or between about 50 and about 245 mg proanthocyanidins per day.

Non-limiting examples of flavan-3-ols which are suitable for use in the inventive nutritional composition include catechin, epicatechin, gallocatechin, epigallocatechin, epicatechin gallate, epicatechin-3-gallate, epigallocatechin and gallate. Plants rich in the suitable flavan-3-ols include, but are not limited to, teas, red grapes, cocoa, green tea, apricot and apple.

Certain polyphenol compounds, in particular flavan-3-ols, may improve learning and memory in a human subject by increasing brain blood flow, which is associated with an increase and sustained brain energy/nutrient delivery as well as formation of new neurons. Polyphenols may also provide neuroprotective actions and may increase both brain synaptogenesis and antioxidant capability, thereby supporting optimal brain development in younger children.

The sources of flavan-3-ols for the nutritional composition include at least one apple extract and at least one grape seed extract. For apple extracts, flavan-3-ols are broken down into monomers occurring in the range 4% to 20% and polymers in the range 80% to 96%. For grape seed extracts flavan-3-ols are broken down into monomers (about 46%) and polymers (about 54%) of the total favan-3-ols and total polyphenolic content. Preferred degree of polymerization of polymeric flavan-3-ols is in the range of between about 2 and 11. Furthermore, apple and grape seed extracts may contain catechin, epicatechin, epigallocatechin, epicatechin gallate, epigallocatechin gallate, polymeric proanthocyanidins, stilbenoids (i.e. resveratrol), flavonols (i.e. quercetin, myricetin), or any mixture thereof. Plant sources rich in flavan-3-ols include, but are not limited to apple, grape seed, grape, grape skin, tea (green or black), pine bark, cinnamon, cocoa, bilberry, cranberry, black currant, chokeberry.

If the nutritional composition is administered to a pediatric subject, an amount of flavan-3-ols, including monomeric flavan-3-ols, polymeric flavan-3-ols or a combination thereof, ranging from between about 0.01 mg and about 450 mg per day may be administered. In some cases, the amount of flavan-3-ols administered to an infant or child may range from about 0.01 mg to about 170 mg per day, from about 50 to about 450 mg per day, or from about 100 mg to about 300 mg per day.

In an embodiment of the disclosure, flavan-3-ols are present in the nutritional composition in an amount ranging from about 0.4 to about 3.8 mg/g nutritional composition (about 9 to about 90 mg/100 kcal). In another embodiment, flavan-3-ols are present in an amount ranging from about 0.8 to about 2.5 mg/g nutritional composition (about 20 to about 60 mg/100 kcal).

A subject's nutritional needs vary with age, and the nutritional composition of the present disclosure may be formulated variously to meet the respective nutritional needs of an intended subject. For example, a nutritional composition prepared for a subject between the ages of birth and about three months may be formulated to deliver between about 0.01 and about 30 mg flavan-3-ols per day or between about 3 and about 10 mg flavan-3-ols per day. A nutritional composition prepared for a subject between the ages of about three and about 12 months may be formulated to deliver between about 0.1 and about 50 mg flavan-3-ols per day or between about 5 and about 15 mg flavan-3-ols per day. A nutritional composition prepared for a subject between the ages of about one and about two years may be formulated to deliver between about 0.1 and about 150 mg flavan-3-ols per day or between about 7 and about 60 mg flavan-3-ols per day. A nutritional composition prepared for a subject between the ages of about two and about three years may be formulated to deliver between about 0.1 and about 225 mg flavan-3-ols per day or between about 9 and about 70 mg flavan-3-ols per day. And a nutritional composition prepared for a subject between the ages of about three and about twelve years may be formulated to deliver between about 0.1 and about 240 mg flavan-3-ols per day or between about 10 and about 80 mg flavan-3-ols per day.

In some embodiments, the nutritional composition of the present disclosure comprises flavanones. Non-limiting examples of suitable flavanones include butin, eriodictyol, hesperetin, hesperidin, homeriodictyol, isosakuranetin, naringenin, naringin, pinocembrin, poncirin, sakuranetin, sakuranin, steurbin. Plant sources rich in flavanones include, but are not limited to orange, tangerine, grapefruit, lemon, lime. The nutritional composition may be formulated to deliver between about 0.01 and about 150 mg flavanones per day.

More specifically, a nutritional composition prepared for a subject between the ages of birth and about three months may be formulated to deliver between about 0.01 and about 20 mg flavanones per day or between about 2 and about 5 mg flavanones per day. A nutritional composition prepared for a subject between the ages of about three and about 12 months may be formulated to deliver between about 0.1 and about 40 mg flavanones per day or between about 3 and about 10 mg flavanones per day. A nutritional composition prepared for a subject between the ages of about one and about two years may be formulated to deliver between about 0.1 and about 60 mg flavanones per day or between about 5 and about 20 mg flavanones per day. A nutritional composition prepared for a subject between the ages of about two and about three years may be formulated to deliver between about 0.1 and about 130 mg flavanones per day or between about 7 and about 30 mg flavanones per day. And a nutritional composition prepared for a subject between the ages of about three and about twelve years may be formulated to deliver between about 0.1 and about 150 mg flavanones per day or between about 9 and about 50 mg flavanones per day.

Moreover, the nutritional composition may also comprise flavonols. Flavonols from plant or algae extracts may be used. Flavonols, such as ishrhametin, kaempferol, myricetin, quercetin, may be included in the nutritional composition in amounts sufficient to deliver between about 0.01 and 150 mg per day to a subject.

In some embodiments, a nutritional composition prepared for a subject between the ages of birth and about three months may be formulated to deliver between about 0.01 and about 20 mg flavonol(s) per day or between about 1 and about 5 mg flavonol(s) per day. A nutritional composition prepared for a subject between the ages of about three and about 12 months may be formulated to deliver between about 0.1 and about 40 mg flavonol(s) per day or between about 2 and about 10 mg flavonol(s) per day. A nutritional composition prepared for a subject between the ages of about one and about two years may be formulated to deliver between about 0.1 and about 60 mg flavonol(s) per day or between about 5 and about 20 mg flavonol(s) per day. A nutritional composition prepared for a subject between the ages of about two and about three years may be formulated to deliver between about 0.1 and about 130 mg flavonol(s) per day or between about 7 and about 30 mg flavonol(s) per day. And a nutritional composition formulated for a subject between the ages of about three and about twelve years may be formulated to deliver between about 0.1 and about 150 mg flavonol(s) per day or between about 9 and about 50 mg flavonol(s) per day.

The phytonutrient component of the nutritional composition may also comprise phytonutrients that have been identified in human milk, including but not limited to naringenin, hesperetin, anthocyanins, quercetin, kaempferol, epicatechin, epigallocatechin, epicatechin-gallate, epigallocatechin-gallate or any combination thereof. In certain embodiments, the nutritional composition comprises between about 50 and about 2000 nmol/L epicatechin, between about 40 and about 2000 nmol/L epicatechin gallate, between about 100 and about 4000 nmol/L epigallocatechin gallate, between about 50 and about 2000 nmol/L naringenin, between about 5 and about 500 nmol/L kaempferol, between about 40 and about 4000 nmol/L hesperetin, between about 25 and about 2000 nmol/L anthocyanins, between about 25 and about 500 nmol/L quercetin, or a mixture thereof. Furthermore, the nutritional composition may comprise the metabolite(s) of a phytonutrient or of its parent compound, or it may comprise other classes of dietary phytonutrients, such as glucosinolate or sulforaphane.

In certain embodiments, the nutritional composition comprises carotenoids, such as lutein, zeaxanthin, astaxanthin, lycopene, beta-carotene, alpha-carotene, gamma-carotene, and/or beta-cryptoxanthin. Plant sources rich in carotenoids include, but are not limited to kiwi, grapes, citrus, tomatoes, watermelons, papayas and other red fruits, or dark greens, such as kale, spinach, turnip greens, collard greens, romaine lettuce, broccoli, zucchini, garden peas and Brussels sprouts, spinach, carrots.

Humans cannot synthesize carotenoids, but over 34 carotenoids have been identified in human breast milk, including isomers and metabolites of certain carotenoids. In addition to their presence in breast milk, dietary carotenoids, such as alpha and beta-carotene, lycopene, lutein, zeaxanthin, astaxanthin, and cryptoxanthin are present in serum of lactating women and breastfed infants. Carotenoids in general have been reported to improve cell-to-cell communication, promote immune function, support healthy respiratory health, protect skin from UV light damage, and have been linked to reduced risk of certain types of cancer, and all-cause mortality. Furthermore, dietary sources of carotenoids and/or polyphenols are absorbed by human subjects, accumulated and retained in breast milk, making them available to nursing infants. Thus, addition of phytonutrients to infant formulas or children's products would bring the formulas closer in composition and functionality to human milk.

In certain embodiments, the nutritional composition is formulated to deliver between about 1 and about 2000 micrograms (µg) lutein and/or zeaxanthin to a subject per day. The term "lutein" refers to lutein, lutein esters, lutein salts or other lutein derivatives. In some embodiments, a nutritional composition prepared for a subject between the ages of birth and about three months may be formulated to deliver between about 1 and about 250 µg lutein and/or zeaxanthin per day or between about 60 and about 120 µg lutein and/or zeaxanthin per day. A nutritional composition prepared for a subject between the ages of about three and about 12 months may be formulated to deliver between about 1 and about 850 µg lutein and/or zeaxanthin per day or between about 50 and about 150 µg lutein and/or zeaxanthin per day. A nutritional composition prepared for a subject between the ages of about one and about two years may be formulated to deliver between about 1 and about 1200 µg lutein and/or zeaxanthin per day or between about 50 and about 200 µg lutein and/or zeaxanthin per day. A nutritional composition prepared for a subject between the ages of about two and about three years may be formulated to deliver between about 1 and about 1500 µg lutein and/or zeaxanthin per day or between about 50 and about 225 µg lutein and/or zeaxanthin per day. And a nutritional composition prepared for a subject between the ages of about three and about twelve years may be formulated to deliver between about 1 and about 2000 µg lutein and/or zeaxanthin per day or between about 50 and about 250 µg lutein and/or zeaxanthin per day.

Flavonoids, as a whole, may also be included in the nutritional composition, as flavonoids cannot be synthesized by humans. Moreover, flavonoids from plant or algae extracts may be useful in the monomer, dimer and/or polymer forms. In some embodiments, the nutritional composition comprises levels of the monomeric forms of flavonoids similar to those in human milk during the first three months of lactation. Although flavonoid aglycones (monomers) have been identified in human milk samples, the conjugated forms of flavonoids and/or their metabolites may also be useful in the nutritional composition. The flavonoids could be added in the following forms: free, glucuronides, methyl glucuronides, sulphates, and methyl sulphates.

The nutritional composition may also comprise isoflavonoids and/or isoflavones. Examples include, but are not limited to, genistein (genistin), daidzein (daidzin), glycitein, biochanin A, formononetin, coumestrol, irilone, orobol, pseudobaptigenin, anagyroidisoflavone A and B, calycosin, glycitein, irigenin, 5-O-methylgenistein, pratensein, prunetin, psi-tectorigenin, retusin, tectorigenin, iridin, ononin, puerarin, tectoridin, derrubone, luteone, wighteone, alpinumisoflavone, barbigerone, di-O-methylalpinumisoflavone, and 4'-methyl-alpinumisoflavone. Plant sources rich in isoflavonoids, include, but are not limited to, soybeans, psoralea, kudzu, lupine, fava, chick pea, alfalfa, legumes and peanuts. The nutritional composition may be formulated to deliver between about 0.01 and about 150 mg isoflavones and/or isoflavonoids per day.

More specifically, a nutritional composition prepared for a subject between the ages of birth and about three months may be formulated to deliver between about 0.01 and about 20 mg isoflavones and/or isoflavonoids per day or between about 1 and about 4 mg isoflavones and/or isoflavonoids per day. A nutritional composition prepared for a subject between the ages of about three and about 12 months may be formulated to deliver between about 0.1 and about 40 mg isoflavones and/or isoflavonoids per day or between about 2 and about 8 mg isoflavones and/or isoflavonoids per day. A nutritional composition prepared for a subject between the ages of about one and about two years may be formulated to deliver between about 0.1 and about 60 mg isoflavones and/or isoflavonoids per day or between about 5 and about 16 mg isoflavones and/or isoflavonoids per day. A nutritional composition prepared for a subject between the ages of about two and about three years may be formulated to deliver between about 0.1 and about 130 mg isoflavones and/or isoflavonoids per day or between about 7 and about 20 mg isoflavones and/or isoflavonoids per day. And a nutritional composition prepared for a subject between the ages of about three and about twelve years may be formulated to deliver between about 0.1 and about 150 mg isoflavones and/or isoflavonoids per day or between about 9 and about 40 mg isoflavones and/or isoflavonoids per day.

The nutritional composition(s) of the present disclosure comprises an effective amount of choline. Choline is a nutrient that is essential for normal function of cells. It is a precursor for membrane phospholipids, and it accelerates the synthesis and release of acetylcholine, a neurotransmitter involved in memory storage. Moreover, though not wishing to be bound by this or any other theory, it is believed that dietary choline and docosahexaenoic acid (DHA) act synergistically to promote the biosynthesis of phosphatidylcholine and thus help promote synaptogenesis in human subjects. Additionally, choline and DHA may exhibit the synergistic effect of promoting dendritic spine formation, which is important in the maintenance of established synaptic connections. In some embodiments, the nutritional composition(s) of the present disclosure includes an effective amount of choline, which is about 20 mg choline per 8 fl. oz. (236.6 mL) serving to about 100 mg per 8 fl. oz. (236.6 mL) serving.

Suitable fat or lipid sources for the nutritional composition of the present disclosure may be any known or used in the art, including but not limited to, animal sources, e.g., milk fat, butter, butter fat, egg yolk lipid; marine sources, such as fish oils, marine oils, single cell oils; vegetable and plant oils, such as corn oil, canola oil, sunflower oil, soybean oil, palm olein oil, coconut oil, high oleic sunflower oil, evening primrose oil, rapeseed oil, olive oil, flaxseed (linseed) oil, cottonseed oil, high oleic safflower oil, palm stearin, palm kernel oil, wheat germ oil; medium chain triglyceride oils and emulsions and esters of fatty acids; and any combinations thereof.

Carbohydrate sources can be any used in the art, e.g., lactose, glucose, fructose, corn syrup solids, maltodextrins, sucrose, starch, rice syrup solids, and the like. The amount of carbohydrate in the nutritional composition typically can vary from between about 6 g and about 22 g/ 100 kcal. In other embodiments, the amount of carbohydrate is between about 12 g and about 14 g/100 kcal.

The nutritional composition(s) of the disclosure may also comprise a protein source. The protein source can be any used in the art, e.g., nonfat milk, whey protein, casein, soy protein, hydrolyzed protein, amino acids, and the like. Bovine milk protein sources useful in practicing the present disclosure include, but are not limited to, milk protein powders, milk protein concentrates, milk protein isolates, nonfat milk solids, nonfat milk, nonfat dry milk, whey protein, whey protein isolates, whey protein concentrates, sweet whey, acid whey, casein, acid casein, caseinate (*e.g.* sodium caseinate, sodium calcium caseinate, calcium caseinate) and any combinations thereof.

In one embodiment, the proteins of the nutritional composition are provided as intact proteins. In other embodiments, the proteins are provided as a combination of both intact proteins and partially hydrolyzed proteins, with a degree of hydrolysis of between about 4% and 10%. In certain other embodiments, the proteins are more completely hydrolyzed. In still other embodiments, the protein source comprises amino acids. In yet another embodiment, the protein source may be supplemented with glutamine-containing peptides.

In a particular embodiment of the nutritional composition, the whey:casein ratio of the protein source is similar to that found in human breast milk. In an embodiment, the protein source comprises from about 40% to about 80% whey protein and from about 20% to about 60% casein.

In some embodiments, the nutritional composition comprises between about 1 g and about 7 g of a protein source per 100 kcal. In other embodiments, the nutritional composition comprises between about 3.5 g and about 4.5 g of protein per 100 kcal.

In one embodiment, the nutritional composition may contain one or more probiotics. The term "probiotic" means a microorganism that exerts beneficial effects on the health of the host. Any probiotic known in the art may be acceptable in this embodiment. In a particular embodiment, the probiotic may be selected from any *Lactobacillus* species, *Lactobacillus rhamnosus* GG (ATCC number 53103), *Bifidobacterium* species, *Bifidobacterium longum* BB536 (BL999, ATCC: BAA-999), *Bifidobacterium longum* AH1206 (NCIMB: 41382), *Bifidobacterium breve* AH1205 (NCIMB: 41387), *Bifidobacterium infantis* 35624 (NCIMB: 41003), and *Bifidobacterium animalis subsp. lactis* BB-12 (DSM No. 10140) or any combination thereof.

If included in the composition, the amount of the probiotic may vary from about 1 x 10⁴ to about 1 x 10¹⁰ colony forming units (cfu) per kg body weight per day. In another embodiment, the amount of the probiotic may vary from about 10⁶ to about 10¹⁰ cfu per kg body weight per day. In still another embodiment, the amount of the probiotic may vary from about 10⁷ to about 10⁹ cfu per day. In yet another embodiment, the amount of the probiotic may be at least about 10⁶ cfu per day.

In an embodiment, the probiotic(s) may be viable or non-viable. As used herein, the term "viable", refers to live microorganisms. The term "non-viable" or "non-viable probiotic" means non-living probiotic microorganisms, their cellular components and/or metabolites thereof. Such non-viable probiotics may have been heat-killed or otherwise inactivated, but they retain the ability to favorably influence the health of the host. The probiotics useful in the present disclosure may be naturally-occurring, synthetic or developed through the genetic manipulation of organisms, whether such new source is now known or later developed.

The nutritional composition also contains one or more prebiotics. The term "prebiotic" as used herein refers to indigestible food ingredients which exert health benefits upon the host. Such health benefits may include, but are not limited to, selective stimulation of the growth and/or activity of one or a limited number of beneficial gut bacteria, stimulation of the growth and/or activity of ingested probiotic microorganisms, selective reduction in gut pathogens, and favorable influence on gut short chain fatty acid profile. Such prebiotics may be naturally-occurring, synthetic, or developed through the genetic manipulation of organisms and/or plants, whether such new source is now known or developed later. Prebiotics useful in the present disclosure may include oligosaccharides, polysaccharides, and other prebiotics that contain fructose, xylose, soya, galactose, glucose and mannose.

More specifically, prebiotics useful in the present disclosure may include polydextrose, polydextrose powder, lactulose, lactosucrose, raffinose, gluco-oligosaccharide, inulin, fructo-oligosaccharide, isomalto-oligosaccharide, soybean oligosaccharides, lactosucrose, xylo-oligosaccharide, chito-oligosaccharide, manno-oligosaccharide, aribino-oligosaccharide, siallyl-oligosaccharide, fuco-oligosaccharide, galacto-oligosaccharide, and gentio-oligosaccharides.

The total amount of prebiotics present in the nutritional composition is from 1.0 g/L to 10.0 g/L of the composition. More preferably, the total amount of prebiotics present in the nutritional composition may be from 2.0 g/L and 8.0 g/L of the composition. At least 20% of the prebiotics are galacto-oligosaccharide, polydextrose or a mixture thereof. The amount of each of galacto-oligosaccharide and/or polydextrose in the nutritional composition may, in an embodiment, be within the range of from 1.0 g/L to 4.0 g/L.

The amount of galacto-oligosaccharide in the nutritional composition may, in an embodiment, be from about 0.1 mg/100 kcal to about 1.0 mg/100 kcal. In another embodiment, the amount of galacto-oligosaccharide in the nutritional composition may be from about 0.1 mg/100 kcal to about 0.5 mg/100 kcal. The amount of polydextrose in the nutritional composition may, in an embodiment, be within the range of from about 0.1 mg/100 kcal to about 0.5 mg/100 kcal. In another embodiment, the amount of polydextrose may be about 0.3 mg/100 kcal. In a particular embodiment, galacto-oligosaccharide and polydextrose are supplemented into the nutritional composition in a total amount of about at least about 0.2 mg/100 kcal and can be about 0.2 mg/100 kcal to about 1.5 mg/100 kcal. In some embodiments, the nutritional composition may comprise galactooligosaccharide and polydextrose in a total amount of from about 0.6 to about 0.8 mg/100 kcal.

The nutritional composition of the disclosure contains a source of long chain polyunsaturated fatty acid (LCPUFA) that comprises docosahexaenoic acid. Other suitable LCPUFAs include, but are not limited to, α-linoleic acid, γ-linoleic acid, linoleic acid, linolenic acid, eicosapentaenoic acid (EPA) and arachidonic acid (ARA).

In an embodiment, especially if the nutritional composition is an infant formula, the nutritional composition is supplemented with both DHA and ARA. In this embodiment, the weight ratio of ARA:DHA may be between about 1:3 and about 9:1. In a particular embodiment, the ratio of ARA:DHA is from about 1:2 to about 4:1.

The amount of long chain polyunsaturated fatty acid in the nutritional composition is advantageously at least 4 mg/100 kcal, and varies from 4 mg/100 kcal to 100 mg/100 kcal, more preferably from about 10 mg/100 kcal to about 50 mg/100 kcal.

The nutritional composition is supplemented with oils containing DHA and may be ARA using standard techniques known in the art. For example, DHA and ARA may be added to the composition by replacing an equivalent amount of an oil, such as high oleic sunflower oil, normally present in the composition. As another example, the oils containing DHA and ARA may be added to the composition by replacing an equivalent amount of the rest of the overall fat blend normally present in the composition without DHA and ARA.

If utilized, the source of DHA and/or ARA may be any source known in the art such as marine oil, fish oil, single cell oil, egg yolk lipid, and brain lipid. In some embodiments, the DHA and ARA are sourced from single cell Martek oils, DHASCO® and ARASCO®, or variations thereof.. The DHA and ARA can be in natural form, provided that the remainder of the LCPUFA source does not result in any substantial deleterious effect on the infant. Alternatively, the DHA and ARA can be used in refined form.

In an embodiment, sources of DHA and ARA are single cell oils as taught in U.S. Pat. Nos. 5,374,567; 5,550,156; and 5,397,591. However, the present disclosure is not limited to only such oils.

As noted, the disclosed nutritional composition may comprise a source of β-glucan. Glucans are polysaccharides, specifically polymers of glucose, which are naturally occurring and may be found in cell walls of bacteria, yeast, fungi, and plants. Beta glucans (β-glucans) are themselves a diverse subset of glucose polymers, which are made up of chains of glucose monomers linked together via beta-type glycosidic bonds to form complex carbohydrates.

β-1,3-glucans are carbohydrate polymers purified from, for example, yeast, mushroom, bacteria, algae, or cereals. (Stone BA, Clarke AE. Chemistry and Biology of (1-3)-Beta-Glucans. London:Portland Press Ltd; 1993.) The chemical structure of β-1,3-glucan depends on the source of the β-1,3-glucan. Moreover, various physiochemical parameters, such as solubility, primary structure, molecular weight, and branching, play a role in biological activities of β-1,3-glucans. (Yadomae T., Structure and biological activities of fungal beta-1,3-glucans. Yakugaku Zasshi. 2000;120:413-431.)

β-1,3-glucans are naturally occurring polysaccharides, with or without β-1,6-glucose side chains that are found in the cell walls of a variety of plants, yeasts, fungi and bacteria. β-1,3;1,6-glucans are those containing glucose units with (1,3) links having side chains attached at the (1,6) position(s). β-1,3;1,6 glucans are a heterogeneous group of glucose polymers that share structural commonalities, including a backbone of straight chain glucose units linked by a β-1,3 bond with β-1,6-linked glucose branches extending from this backbone. While this is the basic structure for the presently described class of β-glucans, some variations may exist. For example, certain yeast β-glucans have additional regions of β(1,3) branching extending from the β(1,6) branches, which add further complexity to their respective structures.

β-glucans derived from baker's yeast, *Saccharomyces cerevisiae,* are made up of chains of D-glucose molecules connected at the 1 and 3 positions, having side chains of glucose attached at the 1 and 6 positions. Yeast-derived β-glucan is an insoluble, fiber-like, complex sugar having the general structure of a linear chain of glucose units with a β-1,3 backbone interspersed with β-1,6 side chains that are generally 6-8 glucose units in length. More specifically, β-glucan derived from baker's yeast is poly-(1,6)-β-D-glucopyranosyl-(1,3)-β-D-glucopyranose.

Furthermore, β-glucans are well tolerated and do not produce or cause excess gas, abdominal distension, bloating or diarrhea in pediatric subjects. Addition of β-glucan to a nutritional composition for a pediatric subject, such as an infant formula, a growing-up milk or another children's nutritional product, will improve the subject's immune response by increasing resistance against invading pathogens and therefore maintaining or improving overall health.

The nutritional composition of the present disclosure comprises β-glucan. In some embodiments, the β-glucan is β-1,3;1,6-glucan. In some embodiments, the β-1,3;1,6-glucan is derived from baker's yeast. The nutritional composition may comprise whole glucan particle β-glucan, particulate β-glucan, PGG-glucan (poly-1,6-β-D-glucopyranosyl-1,3-β-D-glucopyranose) or any mixture thereof.

In some embodiments, the amount of β-glucan present in the composition is at between about 0.010 and about 0.080 g per 100g of composition. In other embodiments, the nutritional composition comprises between about 10 and about 30 mg β-glucan per serving. In another embodiment, the nutritional composition comprises between about 5 and about 30 mg β-glucan per 8 fl. oz. (236.6 mL) serving. In other embodiments, the nutritional composition comprises an amount of β-glucan sufficient to provide between about 15 mg and about 90 mg β-glucan per day. The nutritional composition may be delivered in multiple doses to reach a target amount of β-glucan delivered to the subject throughout the day.

In some embodiments, the amount of β-glucan in the nutritional composition is between about 3 mg and about 17 mg per 100 kcal. In another embodiment the amount of β-glucan is between about 6 mg and about 17 mg per 100 kcal.

One or more vitamins and/or minerals may also be added in to the nutritional composition in amounts sufficient to supply the daily nutritional requirements of a subject. It is to be understood by one of ordinary skill in the art that vitamin and mineral requirements will vary, for example, based on the age of the child. For instance, an infant may have different vitamin and mineral requirements than a child between the ages of one and thirteen years. Thus, the embodiments are not intended to limit the nutritional composition to a particular age group but, rather, to provide a range of acceptable vitamin and mineral components.

In embodiments providing a nutritional composition for a child, the composition may optionally include, but is not limited to, one or more of the following vitamins or derivations thereof: vitamin B₁ (thiamin, thiamin pyrophosphate, TPP, thiamin triphosphate, TTP, thiamin hydrochloride, thiamin mononitrate), vitamin B₂ (riboflavin, flavin mononucleotide, FMN, flavin adenine dinucleotide, FAD, lactoflavin, ovoflavin), vitamin B₃ (niacin, nicotinic acid, nicotinamide, niacinamide, nicotinamide adenine dinucleotide, NAD, nicotinic acid mononucleotide, NicMN, pyridine-3-carboxylic acid), vitamin B₃-precursor tryptophan, vitamin B₆ (pyridoxine, pyridoxal, pyridoxamine, pyridoxine hydrochloride), pantothenic acid (pantothenate, panthenol), folate (folic acid, folacin, pteroylglutamic acid), vitamin B₁₂ (cobalamin, methylcobalamin, deoxyadenosylcobalamin, cyanocobalamin, hydroxycobalamin, adenosylcobalamin), biotin, vitamin C (ascorbic acid), vitamin A (retinol, retinyl acetate, retinyl palmitate, retinyl esters with other long-chain fatty acids, retinal, retinoic acid, retinol esters), vitamin D (calciferol, cholecalciferol, vitamin D₃, 1,25,-dihydroxyvitamin D), vitamin E (α-tocopherol, α-tocopherol acetate, α-tocopherol succinate, α-tocopherol nicotinate, α-tocopherol), vitamin K (vitamin K₁, phylloquinone, naphthoquinone, vitamin K₂, menaquinone-7, vitamin K₃, menaquinone-4, menadione, menaquinone-8, menaquinone-8H, menaquinone-9, menaquinone-9H, menaquinone-10, menaquinone-11, menaquinone-12, menaquinone-13), choline, inositol, β-carotene and any combinations thereof.

In embodiments providing a children's nutritional product, such as a growing-up milk, the composition may optionally include, but is not limited to, one or more of the following minerals or derivations thereof: boron, calcium, calcium acetate, calcium gluconate, calcium chloride, calcium lactate, calcium phosphate, calcium sulfate, chloride, chromium, chromium chloride, chromium picolonate, copper, copper sulfate, copper gluconate, cupric sulfate, fluoride, iron, carbonyl iron, ferric iron, ferrous fumarate, ferric orthophosphate, iron trituration, polysaccharide iron, iodide, iodine, magnesium, magnesium carbonate, magnesium hydroxide, magnesium oxide, magnesium stearate, magnesium sulfate, manganese, molybdenum, phosphorus, potassium, potassium phosphate, potassium iodide, potassium chloride, potassium acetate, selenium, sulfur, sodium, docusate sodium, sodium chloride, sodium selenate, sodium molybdate, zinc, zinc oxide, zinc sulfate and mixtures thereof. Non-limiting exemplary derivatives of mineral compounds include salts, alkaline salts, esters and chelates of any mineral compound.

The minerals can be added to growing-up milks or to other children's nutritional compositions in the form of salts such as calcium phosphate, calcium glycerol phosphate, sodium citrate, potassium chloride, potassium phosphate, magnesium phosphate, ferrous sulfate, zinc sulfate, cupric sulfate, manganese sulfate, and sodium selenite. Additional vitamins and minerals can be added as known within the art.

In an embodiment, the children's nutritional composition may contain between about 10 and about 50% of the maximum dietary recommendation for any given country, or between about 10 and about 50% of the average dietary recommendation for a group of countries, per serving of vitamins A, C, and E, zinc, iron, iodine, selenium, and choline. In another embodiment, the children's nutritional composition may supply about 10 - 30% of the maximum dietary recommendation for any given country, or about 10 - 30% of the average dietary recommendation for a group of countries, per serving of B-vitamins. In yet another embodiment, the levels of vitamin D, calcium, magnesium, phosphorus, and potassium in the children's nutritional product may correspond with the average levels found in milk. In other embodiments, other nutrients in the children's nutritional composition may be present at about 20% of the maximum dietary recommendation for any given country, or about 20% of the average dietary recommendation for a group of countries, per serving.

The children's nutritional composition of the present disclosure may optionally include one or more of the following flavoring agents, including, but not limited to, flavored extracts, volatile oils, cocoa or chocolate flavorings, peanut butter flavoring, cookie crumbs, vanilla or any commercially available flavoring. Examples of useful flavorings include, but are not limited to, pure anise extract, imitation banana extract, imitation cherry extract, chocolate extract, pure lemon extract, pure orange extract, pure peppermint extract, honey, imitation pineapple extract, imitation rum extract, imitation strawberry extract, or vanilla extract; or volatile oils, such as balm oil, bay oil, bergamot oil, cedarwood oil, cherry oil, cinnamon oil, clove oil, or peppermint oil; peanut butter, chocolate flavoring, vanilla cookie crumb, butterscotch, toffee, and mixtures thereof. The amounts of flavoring agent can vary greatly depending upon the flavoring agent used. The type and amount of flavoring agent can be selected as is known in the art.

The nutritional compositions of the present disclosure may optionally include one or more emulsifiers that may be added for stability of the final product. Examples of suitable emulsifiers include, but are not limited to, lecithin (*e.g.,* from egg or soy), alpha lactalbumin and/or mono- and di-glycerides, and mixtures thereof. Other emulsifiers are readily apparent to the skilled artisan and selection of suitable emulsifier(s) will depend, in part, upon the formulation and final product.

The nutritional compositions of the present disclosure may optionally include one or more preservatives that may also be added to extend product shelf life. Suitable preservatives include, but are not limited to, potassium sorbate, sodium sorbate, potassium benzoate, sodium benzoate, calcium disodium EDTA, and mixtures thereof.

The nutritional compositions of the present disclosure may optionally include one or more stabilizers. Suitable stabilizers for use in practicing the nutritional composition of the present disclosure include, but are not limited to, gum arabic, gum ghatti, gum karaya, gum tragacanth, agar, furcellaran, guar gum, gellan gum, locust bean gum, pectin, low methoxyl pectin, gelatin, microcrystalline cellulose, CMC (sodium carboxymethylcellulose), methylcellulose hydroxypropyl methyl cellulose, hydroxypropyl cellulose, DATEM (diacetyl tartaric acid esters of mono- and diglycerides), dextran, carrageenans, and mixtures thereof.

The nutritional compositions described herein can, in some embodiments, also comprise non-human lactoferrin, non-human lactoferrin produced by a genetically modified organism and/or human lactoferrin produced by a genetically modified organism. Lactoferrin is generally described as an 80 kilodalton glycoprotein having a structure of two nearly identical lobes, both of which include iron binding sites. As described in *"*Perspectives on Interactions Between Lactoferrin and Bacteria" which appeared in the publication BIOCHEMISTRY AND CELL BIOLOGY, pp 275-281 (2006), lactoferrin from different host species may vary in an amino acid sequence though commonly possesses a relatively high isoelectric point with positively charged amino acids at the end terminal region of the internal lobe. Lactoferrin has been recognized as having bactericidal and antimicrobial activities. In at least one embodiment, the lactoferrin is bovine lactoferrin.

Surprisingly, the forms of lactoferrin included herein maintain relevant activity even if exposed to a low pH (i.e., below about 7, and even as low as about 4.6 or lower) and/or high temperatures (i.e., above about 65°C, and as high as about 120°C, conditions which would be expected to destroy or severely limit the stability or activity of human lactoferrin or recombinant human lactoferrin. These low pH and/or high temperature conditions can be expected during certain processing regimen for nutritional compositions of the types described herein, such as pasteurization.

disclosure is nutritionally complete and contains suitable types and amounts of lipid, carbohydrate, protein, vitamins and minerals. The amount of lipid or fat varies from about 1 to about 7 g/100 kcal. The amount of protein varies from about 1 to about 7 g/100 kcal. The amount of carbohydrate varies from about 6 to about 22 g/100 kcal.

In some embodiments, the nutritional composition of the present disclosure is a growing-up milk. Growing-up milks are fortified milk-based beverages intended for children over 1 year of age (typically from 1-3 years of age, from 4-6 years of age or from 1-6 years of age). They are not medical foods and are not intended as a meal replacement or a supplement to address a particular nutritional deficiency. Instead, growing-up milks are designed with the intent to serve as a complement to a diverse diet to provide additional insurance that a child achieves continual, daily intake of all essential vitamins and minerals, macronutrients plus additional functional dietary components, such as non-essential nutrients that have purported health-promoting properties.

In some embodiments, nutritional compositions according to the present disclosure that comprise DHA, choline and phytonutrients help nurture optimal brain development in children between about 1 year and about 12 years of age. Indeed, choline, DHA and polyphenol phytonutrients can promote molecular and biochemical mechanisms involved in neurogenesis and synaptogenesis; events that are fundamental for brain plasticity during early childhood. In some embodiments, the nutritional composition comprising DHA, choline and polyphenols is designed to work in concert with a regular, daily diet in order to support optimal brain development in pediatric subjects.

The exact composition of a growing-up milk or other nutritional composition according to the present disclosure can vary from market-to-market, depending on local regulations and dietary intake information of the population of interest. In some embodiments, nutritional compositions according to the disclosure consist of a milk protein source, such as whole or skim milk, plus added sugar and sweeteners to achieve desired sensory properties, and added vitamins and minerals. The fat composition is typically derived from the milk raw materials. Total protein can be targeted to match that of human milk, cow milk or a lower value. Total carbohydrate is usually targeted to provide as little added sugar, such as sucrose or fructose, as possible to achieve an acceptable taste. Typically, Vitamin A, calcium and Vitamin D are added at levels to match the nutrient contribution of regional cow milk. Otherwise, in some embodiments, vitamins and minerals can be added at levels that provide approximately 20% of the dietary reference intake (DRI) or 20% of the Daily Value (DV) per serving. Moreover, nutrient values can vary between markets depending on the identified nutritional needs of the intended population, raw material contributions and regional regulations.

Examples are provided to illustrate some embodiments of the nutritional composition of the present disclosure but should not be interpreted as any limitation thereon. Other embodiments within the scope of the claims herein will be apparent to one skilled in the art from the consideration of the specification or practice of the nutritional composition or methods disclosed herein. It is intended that the specification, together with the example, be considered to be exemplary only, with the scope of the disclosure being indicated by the claims which follow the example.

### FORMULATION EXAMPLES

Tables 1-4 provide example embodiments of nutritional compositions according to the present disclosure and describe the amount of each ingredient to be included per 100 kcal serving. The prebiotic comprises at least 20% galactooligosaccharide, polydextrose or a mixture thereof. Further, the carotenoids may comprise lutein, zeaxanthin, astaxanthin or a combination thereof. Finally, the iron may comprise encapsulated iron forms, such as encapsulated ferrous fumarate or encapsulated ferrous sulfate or less reactive iron forms, such as ferric pyrophosphate or ferric orthophosphate.

**Table 1. Nutrition profile of an example nutritional composition**

| | **per 100 kcal** | |
|---|---|---|
| **Nutrient/Phytonutrient** | | |
| | **Minimum** | **Maximum** |
| Protein (g) | 1.8 | 6.8 |
| Fat (g) | 1.5 | 6.2 |
| Carbohydrates (g) | 6 | 22 |
| Prebiotic (g) | 0.3 | 1.2 |
| DHA (mg) | 4 | 22 |
| Beta glucan (mg) | 2.9 | 17 |
| Carotenoids (mg) | 9.5 | 86 |
| Polyphenols (i.e. flavan-3-ols) (mg) | 9.5 | 86 |
| Apple extract (mg) | 16 | 144 |
| Grape seed extract (mg) | 16 | 144 |
| Probiotics (cfu) | 9.60E+05 | 3.80E+08 |
| Vitamin A (IU) | 134 | 921 |
| Vitamin D (IU) | 22 | 126 |
| Vitamin E (IU) | 0.8 | 5.4 |
| Vitamin K (mcg) | 2.9 | 18 |
| Thiamin (mcg) | 63 | 328 |
| Riboflavin (mcg) | 68 | 420 |
| Vitamin B6 (mcg) | 52 | 397 |
| Vitamin B12 (mcg) | 0.2 | 0.9 |
| Niacin (mcg) | 690 | 5881 |
| Folic acid (mcg) | 8 | 66 |
| Panthothenic acid (mcg) | 232 | 1211 |
| Biotin (mcg) | 1.4 | 5.5 |
| Vitamin C (mg) | 4.9 | 24 |
| Choline (mg) | 4.9 | 43 |
| Calcium (mg) | 68 | 297 |
| Phosphorus (mg) | 54 | 210 |
| Magnesium (mg) | 4.9 | 34 |
| Sodium (mg) | 24 | 88 |
| Potassium (mg) | 82 | 346 |
| Chloride (mg) | 53 | 237 |
| Iodine (mcg) | 8.9 | 79 |
| Iron (mg) | 0.7 | 2.8 |
| Zinc (mg) | 0.7 | 2.4 |
| Manganese (mcg) | 7.2 | 41 |
| Copper (mcg) | 16 | 331 |

**Table 2. Nutrition profile of an example nutritional composition**

| | **per 100 kcal** | |
|---|---|---|
| **Nutrient/Phytonutrient** | | |
| | **Minimum** | **Maximum** |
| Protein (g) | 3.6 | 4.5 |
| Fat (g) | 2.9 | 4.1 |
| Carbohydrates (g) | 12 | 14 |
| Prebiotic (g) | 0.6 | 0.8 |
| DHA (mg) | 8 | 14 |
| Beta glucan (mg) | 5.7 | 17 |
| Carotenoids (mg) | 19 | 57 |
| Polyphenols (i.e. flavan-3-ols) (mg) | 19 | 57 |
| Apple extract (mg) | 32 | 96 |
| Grape seed extract (mg) | 32 | 96 |
| Probiotics (cfu) | 3.80E+06 | 9.60E+07 |
| Vitamin A (IU) | 269 | 614 |
| Vitamin D (IU) | 44 | 84 |
| Vitamin E (IU) | 1.6 | 3.6 |
| Vitamin K (mcg) | 5.7 | 12 |
| Thiamin (mcg) | 126 | 219 |
| Riboflavin (mcg) | 136 | 280 |
| Vitamin B6 (mcg) | 104 | 264 |
| Vitamin B12 (mcg) | 0.4 | 0.6 |
| Niacin (mcg) | 1380 | 3921 |
| Folic acid (mcg) | 16 | 44 |
| Panthothenic acid (mcg) | 465 | 807 |
| Biotin (mcg) | 2.8 | 3.7 |
| Vitamin C (mg) | 9.8 | 16 |
| Choline (mg) | 9.8 | 29 |
| Calcium (mg) | 136 | 198 |
| Phosphorus (mg) | 108 | 140 |
| Magnesium (mg) | 9.8 | 23 |
| Sodium (mg) | 48 | 59 |
| Potassium (mg) | 163 | 230 |
| Chloride (mg) | 106 | 158 |
| Iodine (mcg) | 18 | 53 |
| Iron (mg) | 1.4 | 1.8 |
| Zinc (mg) | 1.3 | 1.6 |
| Manganese (mcg) | 14 | 27 |
| Copper (mcg) | 32 | 221 |

**Table 3. Nutrition profile of an example nutritional composition**

| | **per 100 kcal** | |
|---|---|---|
| **Nutrient/Phytonutrient** | | |
| | **Minimum** | **Maximum** |
| Protein (g) | 1.8 | 6.8 |
| Fat (g) | 1.5 | 6.2 |
| Carbohydrates (g) | 6 | 22 |
| Prebiotic (g) | 0.3 | 1.2 |
| DHA (mg) | 4 | 22 |
| Beta glucan (mg) | 2.9 | 17 |
| Carotenoids (mg) | 9.5 | 86 |
| Polyphenols (i.e. flavan-3-ols) (mg) | 9.5 | 86 |
| Apple extract (mg) | 9.5 - 32 | 86 - 287 |
| Grape seed extract (mg) | 9.5 - 32 | 86 - 287 |
| Probiotics (cfu) | 9.60E+05 | 3.80E+08 |
| Vitamin A (IU) | 134 | 921 |
| Vitamin D (IU) | 22 | 126 |
| Vitamin E (IU) | 0.8 | 5.4 |
| Vitamin K (mcg) | 2.9 | 18 |
| Thiamin (mcg) | 63 | 328 |
| Riboflavin (mcg) | 68 | 420 |
| Vitamin B6 (mcg) | 52 | 397 |
| Vitamin B12 (mcg) | 0.2 | 0.9 |
| Niacin (mcg) | 690 | 5881 |
| Folic acid (mcg) | 8 | 66 |
| Panthothenic acid (mcg) | 232 | 1211 |
| Biotin (mcg) | 1.4 | 5.5 |
| Vitamin C (mg) | 4.9 | 24 |
| Choline (mg) | 4.9 | 43 |
| Calcium (mg) | 68 | 297 |
| Phosphorus (mg) | 54 | 210 |
| Magnesium (mg) | 4.9 | 34 |
| Sodium (mg) | 24 | 88 |
| Potassium (mg) | 82 | 346 |
| Chloride (mg) | 53 | 237 |
| Iodine (mcg) | 8.9 | 79 |
| Iron (mg) | 0.7 | 2.8 |
| Zinc (mg) | 0.7 | 2.4 |
| Manganese (mcg) | 7.2 | 41 |
| Copper (mcg) | 16 | 331 |

**Table 4. Nutrition profile of an example nutritional composition**

| | **per 100 kcal** | |
|---|---|---|
| **Nutrient/Phytonutrient** | | |
| | **Minimum** | **Maximum** |
| Protein (g) | 3.6 | 4.5 |
| Fat (g) | 2.9 | 4.1 |
| Carbohydrates (g) | 12 | 14 |
| Prebiotic (g) | 0.6 | 0.8 |
| DHA (mg) | 8 | 14 |
| Beta glucan (mg) | 5.7 | 17 |
| Carotenoids (mg) | 19 | 57 |
| Polyphenols (i.e. flavan-3-ols) (mg) | 19 | 57 |
| Apple extract (mg) | 19 - 64 | 64 - 190 |
| Grape seed extract (mg) | 19 - 64 | 64 - 190 |
| Probiotics (cfu) | 3.80E+06 | 9.60E+07 |
| Vitamin A (IU) | 269 | 614 |
| Vitamin D (IU) | 44 | 84 |
| Vitamin E (IU) | 1.6 | 3.6 |
| Vitamin K (mcg) | 5.7 | 12 |
| Thiamin (mcg) | 126 | 219 |
| Riboflavin (mcg) | 136 | 280 |
| Vitamin B6 (mcg) | 104 | 264 |
| Vitamin B12 (mcg) | 0.4 | 0.6 |
| Niacin (mcg) | 1380 | 3921 |
| Folic acid (mcg) | 16 | 44 |
| Panthothenic acid (mcg) | 465 | 807 |
| Biotin (mcg) | 2.8 | 3.7 |
| Vitamin C (mg) | 9.8 | 16 |
| Choline (mg) | 9.8 | 29 |
| Calcium (mg) | 136 | 198 |
| Phosphorus (mg) | 108 | 140 |
| Magnesium (mg) | 9.8 | 23 |
| Sodium (mg) | 48 | 59 |
| Potassium (mg) | 163 | 230 |
| Chloride (mg) | 106 | 158 |
| Iodine (mcg) | 18 | 53 |
| Iron (mg) | 1.4 | 1.8 |
| Zinc (mg) | 1.3 | 1.6 |
| Manganese (mcg) | 14 | 27 |
| Copper (mcg) | 32 | 221 |

Tables 5-8 provide example of embodiments of the nutritional composition of the present disclosure, illustrating the amount of each ingredient to be delivered to a subject per day. In these embodiments, the prebiotic comprises at least 20% galactooligosaccharide, polydextrose or a combination thereof. Further, the carotenoids may comprise lutein, zeaxanthin, astaxanthin, or any combination thereof. Finally, the iron comprises encapsulated iron forms, such as encapsulated ferrous fumarate or encapsulated ferrous sulfate or less reactive iron forms, such as ferric pyrophosphate or ferric orthophosphate.

**Table 5. Nutrition profile of an example nutritional composition**

| **Nutrient/Phytonutrient** | **per day** | |
|---|---|---|
| | **Minimum** | **Maximum** |
| Protein (g) | 9.3 | 36 |
| Fat (g) | 7.7 | 32 |
| Carbohydrates (g) | 32 | 113 |
| Prebiotic (g) | 1.7 | 6.3 |
| DHA (mg) | 21 | 113 |
| Beta glucan (mg) | 15 | 90 |
| Carotenoids (mg) | 50 | 450 |
| Polyphenols (i.e. flavan-3-ols) (mg) | 50 | 450 |
| Apple extract (mg) | 83 | 752 |
| Grape seed extract (mg) | 83 | 752 |
| Probiotics (cfu) | 5.0E+0.6 | 2.00E+09 |
| Vitamin A (IU) | 702 | 4806 |
| Vitamin D (IU) | 114 | 657 |
| Vitamin E (IU) | 4.1 | 28 |
| Vitamin K (mcg) | 15 | 95 |
| Thiamin (mcg) | 330 | 1715 |
| Riboflavin (mcg) | 354 | 2192 |
| Vitamin B6 (mcg) | 272 | 2070 |
| Vitamin B12 (mcg) | 1.1 | 4.5 |
| Niacin (mcg) | 3602 | 30699 |
| Folic acid (mcg) | 42 | 342 |
| Panthothenic acid (mcg) | 1214 | 6322.5 |
| Biotin (mcg) | 7.4 | 29 |
| Vitamin C (mg) | 26 | 126 |
| Choline (mg) | 26 | 225 |
| Calcium (mg) | 356 | 1548 |
| Phosphorus (mg) | 282 | 1098 |
| Magnesium (mg) | 26 | 180 |
| Sodium (mg) | 126 | 459 |
| Potassium (mg) | 426 | 1805 |
| Chloride (mg) | 278 | 1238 |
| Iodine (mcg) | 47 | 414 |
| Iron (mg) | 3.8 | 14 |
| Zinc (mg) | 3.5 | 13 |
| Manganese (mcg) | 38 | 212 |
| Copper (mcg) | 83 | 1728 |

**Table 6. Nutrition profile of an example nutritional composition**

| **Nutrient/Phytonutrient** | **per day** | |
|---|---|---|
| | **Minimum** | **Maximum** |
| Protein (g) | 19 | 24 |
| Fat (g) | 15 | 22 |
| Carbohydrates (g) | 63 | 75 |
| Prebiotic (g) | 3.3 | 4.2 |
| DHA (mg) | 42 | 75 |
| Beta glucan (mg) | 30 | 90 |
| Carotenoids (mg) | 99 | 300 |
| Polyphenols (i.e. flavan-3-ols) (mg) | 99 | 300 |
| Apple extract (mg) | 165 | 501 |
| Grape seed extract (mg) | 165 | 501 |
| Probiotics (cfu) | 2.00E+07 | 5.00E+08 |
| Vitamin A (IU) | 1.40E+03 | 3204 |
| Vitamin D (IU) | 228 | 438 |
| Vitamin E (IU) | 8.1 | 19 |
| Vitamin K (mcg) | 30 | 63 |
| Thiamin (mcg) | 660 | 1143 |
| Riboflavin (mcg) | 708 | 1461 |
| Vitamin B6 (mcg) | 543 | 1380 |
| Vitamin B12 (mcg) | 2.1 | 3 |
| Niacin (mcg) | 7203 | 20466 |
| Folic acid (mcg) | 84 | 228 |
| Panthothenic acid (mcg) | 2427 | 4215 |
| Biotin (mcg) | 15 | 19 |
| Vitamin C (mg) | 51 | 84 |
| Choline (mg) | 51 | 150 |
| Calcium (mg) | 711 | 1032 |
| Phosphorus (mg) | 564 | 732 |
| Magnesium (mg) | 51 | 120 |
| Sodium (mg) | 249 | 306 |
| Potassium (mg) | 852 | 1203 |
| Chloride (mg) | 555 | 825 |
| Iodine (mcg) | 93 | 276 |
| Iron (mg) | 7.5 | 9.6 |
| Zinc (mg) | 6.9 | 8.4 |
| Manganese (mcg) | 75 | 141 |
| Copper (mcg) | 165 | 1152 |

**Table 7. Nutrition profile of an example nutritional composition**

| **Nutrient/Phytonutrient** | **per day** | |
|---|---|---|
| | **Minimum** | **Maximum** |
| Protein (g) | 9.3 | 36 |
| Fat (g) | 7.7 | 32 |
| Carbohydrates (g) | 32 | 113 |
| Prebiotic (g) | 1.7 | 6.3 |
| DHA (mg) | 21 | 113 |
| Beta glucan (mg) | 15 | 90 |
| Carotenoids (mg) | 50 | 450 |
| Polyphenols (i.e. flavan-3-ols) (mg) | 50 | 450 |
| Apple extract (mg) | 50 - 167 | 450 - 1500 |
| Grape seed extract (mg) | 50 - 167 | 450 - 1500 |
| Probiotics (cfu) | 5.0E+0.6 | 2.00E+09 |
| Vitamin A (IU) | 702 | 4806 |
| Vitamin D (IU) | 114 | 657 |
| Vitamin E (IU) | 4.1 | 28 |
| Vitamin K (mcg) | 15 | 95 |
| Thiamin (mcg) | 330 | 1715 |
| Riboflavin (mcg) | 354 | 2192 |
| Vitamin B6 (mcg) | 272 | 2070 |
| Vitamin B12 (mcg) | 1.1 | 4.5 |
| Niacin (mcg) | 3602 | 30699 |
| Folic acid (mcg) | 42 | 342 |
| Panthothenic acid (mcg) | 1214 | 6322.5 |
| Biotin (mcg) | 7.4 | 29 |
| Vitamin C (mg) | 26 | 126 |
| Choline (mg) | 26 | 225 |
| Calcium (mg) | 356 | 1548 |
| Phosphorus (mg) | 282 | 1098 |
| Magnesium (mg) | 26 | 180 |
| Sodium (mg) | 126 | 459 |
| Potassium (mg) | 426 | 1805 |
| Chloride (mg) | 278 | 1238 |
| Iodine (mcg) | 47 | 414 |
| Iron (mg) | 3.8 | 14 |
| Zinc (mg) | 3.5 | 13 |
| Manganese (mcg) | 38 | 212 |
| Copper (mcg) | 83 | 1728 |

**Table 8. Nutrition profile of an example nutritional composition**

| **Nutrient/Phytonutrient** | **per day** | |
|---|---|---|
| | **Minimum** | **Maximum** |
| Protein (g) | 19 | 24 |
| Fat (g) | 15 | 22 |
| Carbohydrates (g) | 63 | 75 |
| Prebiotic (g) | 3.3 | 4.2 |
| DHA (mg) | 42 | 75 |
| Beta glucan (mg) | 30 | 90 |
| Carotenoids (mg) | 99 | 300 |
| Polyphenols (i.e. flavan-3-ols) (mg) | 99 | 300 |
| Apple extract (mg) | 99 - 330 | 330 - 1000 |
| Grape seed extract (mg) | 99 - 330 | 330 - 1000 |
| Probiotics (cfu) | 2.00E+07 | 5.00E+08 |
| Vitamin A (IU) | 1.40E+03 | 3204 |
| Vitamin D (IU) | 228 | 438 |
| Vitamin E (IU) | 8.1 | 19 |
| Vitamin K (mcg) | 30 | 63 |
| Thiamin (mcg) | 660 | 1143 |
| Riboflavin (mcg) | 708 | 1461 |
| Vitamin B6 (mcg) | 543 | 1380 |
| Vitamin B12 (mcg) | 2.1 | 3 |
| Niacin (mcg) | 7203 | 20466 |
| Folic acid (mcg) | 84 | 228 |
| Panthothenic acid (mcg) | 2427 | 4215 |
| Biotin (mcg) | 15 | 19 |
| Vitamin C (mg) | 51 | 84 |
| Choline (mg) | 51 | 150 |
| Calcium (mg) | 711 | 1032 |
| Phosphorus (mg) | 564 | 732 |
| Magnesium (mg) | 51 | 120 |
| Sodium (mg) | 249 | 306 |
| Potassium (mg) | 852 | 1203 |
| Chloride (mg) | 555 | 825 |
| Iodine (mcg) | 93 | 276 |
| Iron (mg) | 7.5 | 9.6 |
| Zinc (mg) | 6.9 | 8.4 |
| Manganese (mcg) | 75 | 141 |
| Copper (mcg) | 165 | 1152 |

Tables 9-12 provide example of embodiments of a liquid nutritional composition according to the present disclosure. More specifically, Tables 9-12 provide the amounts of each ingredient of the nutritional composition that may be included in an 8 fl. oz. (236.6 mL) serving. In these embodiments, the prebiotic comprises at least 20% galactooligosaccharide, polydextrose or a mixture thereof. Further, the carotenoids may comprise lutein, zeaxanthin, astaxanthin, or a combination thereof. Finally, the iron comprises encapsulated iron forms, such as encapsulated ferrous fumarate or encapsulated ferrous sulfate or less reactive iron forms, such as ferric pyrophosphate or ferric orthophosphate.

**Table 9. Nutrition profile of an example nutritional composition**

| **Nutrient/Phytonutrient** | **per 8 fl oz** (236.6 mL) **serving** | |
|---|---|---|
| | **Minimum** | **Maximum** |
| Protein (g) | 3.1 | 12 |
| Fat (g) | 2.6 | 11 |
| Carbohydrates (g) | 11 | 38 |
| Prebiotic (g) | 0.6 | 2.1 |
| DHA (mg) | 7 | 38 |
| Beta glucan (mg) | 5 | 30 |
| Carotenoids (mg) | 17 | 150 |
| Polyphenols (i.e. flavan-3-ols) (mg) | 17 | 150 |
| Apple extract (mg) | 28 | 251 |
| Grape seed extract (mg) | 28 | 251 |
| Probiotics (cfu) | 1.70E+06 | 6.70E+08 |
| Vitamin A (IU) | 234 | 1602 |
| Vitamin D (IU) | 38 | 219 |
| Vitamin E (IU) | 1.4 | 9.5 |
| Vitamin K (mcg) | 5 | 32 |
| Thiamin (mcg) | 110 | 572 |
| Riboflavin (mcg) | 118 | 731 |
| Vitamin B6 (mcg) | 91 | 690 |
| Vitamin B12 (mcg) | 0.4 | 1.5 |
| Niacin (mcg) | 1201 | 10233 |
| Folic acid (mcg) | 14 | 114 |
| Panthothenic acid (mcg) | 105 | 2108 |
| Biotin (mcg) | 2.5 | 9.6 |
| Vitamin C (mg) | 8.5 | 42 |
| Choline (mg) | 8.5 | 85 |
| Calcium (mg) | 119 | 516 |
| Phosphorus (mg) | 94 | 366 |
| Magnesium (mg) | 8.5 | 60 |
| Sodium (mg) | 42 | 153 |
| Potassium (mg) | 142 | 602 |
| Chloride (mg) | 93 | 413 |
| Iodine (mcg) | 16 | 138 |
| Iron (mg) | 1.3 | 5.8 |
| Zinc (mg) | 1.2 | 5.2 |
| Manganese (mcg) | 13 | 71 |
| Copper (mcg) | 28 | 576 |

**Table 10. Nutrition profile of an example nutritional composition**

| **Nutrient/Phytonutrient** | **per 8 fl oz** (236.6 mL) **serving** | |
|---|---|---|
| | **Minimum** | **Maximum** |
| Protein (g) | 6.2 | 7.9 |
| Fat (g) | 5.1 | 7.2 |
| Carbohydrates (g) | 21 | 25 |
| Prebiotic (g) | 1.1 | 1.4 |
| DHA (mg) | 14 | 25 |
| Beta glucan (mg) | 10 | 30 |
| Carotenoids (mg) | 33 | 100 |
| Polyphenols (i.e. flavan-3-ols) (mg) | 33 | 100 |
| Apple extract (mg) | 55 | 167 |
| Grape seed extract (mg) | 55 | 167 |
| Probiotics (cfu) | 6.70E+06 | 1.70E+08 |
| Vitamin A (IU) | 468 | 1068 |
| Vitamin D (IU) | 76 | 146 |
| Vitamin E (IU) | 2.7 | 6.3 |
| Vitamin K (mcg) | 10 | 21 |
| Thiamin (mcg) | 220 | 381 |
| Riboflavin (mcg) | 236 | 487 |
| Vitamin B6 (mcg) | 181 | 460 |
| Vitamin B12 (mcg) | 0.7 | 1 |
| Niacin (mcg) | 2401 | 6822 |
| Folic acid (mcg) | 28 | 76 |
| Panthothenic acid (mcg) | 809 | 1405 |
| Biotin (mcg) | 4.9 | 6.4 |
| Vitamin C (mg) | 17 | 28 |
| Choline (mg) | 17 | 50 |
| Calcium (mg) | 237 | 344 |
| Phosphorus (mg) | 188 | 244 |
| Magnesium (mg) | 17 | 40 |
| Sodium (mg) | 83 | 102 |
| Potassium (mg) | 284 | 401 |
| Chloride (mg) | 185 | 275 |
| Iodine (mcg) | 31 | 92 |
| Iron (mg) | 2.5 | 3.2 |
| Zinc (mg) | 2.3 | 2.8 |
| Manganese (mcg) | 25 | 47 |
| Copper (mcg) | 55 | 384 |

**Table 11. Nutrition profile of an example nutritional composition**

| **Nutrient/Phytonutrient** | **per 8 fl oz** (236.6 mL) **serving** | |
|---|---|---|
| | **Minimum** | **Maximum** |
| Protein (g) | 3.1 | 12 |
| Fat (g) | 2.6 | 11 |
| Carbohydrates (g) | 11 | 38 |
| Prebiotic (g) | 0.6 | 2.1 |
| DHA (mg) | 7 | 38 |
| Beta glucan (mg) | 5 | 30 |
| Carotenoids (mg) | 17 | 150 |
| Polyphenols (i.e. flavan-3-ols) (mg) | 17 | 150 |
| Apple extract (mg) | 17 - 57 | 150 - 500 |
| Grape seed extract (mg) | 17 - 57 | 150 - 500 |
| Probiotics (cfu) | 1.70E+06 | 6.70E+08 |
| Vitamin A (IU) | 234 | 1602 |
| Vitamin D (IU) | 38 | 219 |
| Vitamin E (IU) | 1.4 | 9.5 |
| Vitamin K (mcg) | 5 | 32 |
| Thiamin (mcg) | 110 | 572 |
| Riboflavin (mcg) | 118 | 731 |
| Vitamin B6 (mcg) | 91 | 690 |
| Vitamin B12 (mcg) | 0.4 | 1.5 |
| Niacin (mcg) | 1201 | 10233 |
| Folic acid (mcg) | 14 | 114 |
| Panthothenic acid (mcg) | 105 | 2108 |
| Biotin (mcg) | 2.5 | 9.6 |
| Vitamin C (mg) | 8.5 | 42 |
| Choline (mg) | 8.5 | 85 |
| Calcium (mg) | 119 | 516 |
| Phosphorus (mg) | 94 | 366 |
| Magnesium (mg) | 8.5 | 60 |
| Sodium (mg) | 42 | 153 |
| Potassium (mg) | 142 | 602 |
| Chloride (mg) | 93 | 413 |
| Iodine (mcg) | 16 | 138 |
| Iron (mg) | 1.3 | 5.8 |
| Zinc (mg) | 1.2 | 5.2 |
| Manganese (mcg) | 13 | 71 |
| Copper (mcg) | 28 | 576 |

**Table 12. Nutrition profile of an example nutritional composition**

| **Nutrient/Phytonutrient** | **per 8 fl oz** (236.6 mL) **serving** | |
|---|---|---|
| | **Minimum** | **Maximum** |
| Protein (g) | 6.2 | 7.9 |
| Fat (g) | 5.1 | 7.2 |
| Carbohydrates (g) | 21 | 25 |
| Prebiotic (g) | 1.1 | 1.4 |
| DHA (mg) | 14 | 25 |
| Beta glucan (mg) | 10 | 30 |
| Carotenoids (mg) | 33 | 100 |
| Polyphenols (i.e. flavan-3-ols) (mg) | 33 | 100 |
| Apple extract (mg) | 33 - 110 | 110 - 334 |
| Grape seed extract (mg) | 33 - 110 | 110 - 334 |
| Probiotics (cfu) | 6.70E+06 | 1.70E+08 |
| Vitamin A (IU) | 468 | 1068 |
| Vitamin D (IU) | 76 | 146 |
| Vitamin E (IU) | 2.7 | 6.3 |
| Vitamin K (mcg) | 10 | 21 |
| Thiamin (mcg) | 220 | 381 |
| Riboflavin (mcg) | 236 | 487 |
| Vitamin B6 (mcg) | 181 | 460 |
| Vitamin B12 (mcg) | 0.7 | 1 |
| Niacin (mcg) | 2401 | 6822 |
| Folic acid (mcg) | 28 | 76 |
| Panthothenic acid (mcg) | 809 | 1405 |
| Biotin (mcg) | 4.9 | 6.4 |
| Vitamin C (mg) | 17 | 28 |
| Choline (mg) | 17 | 50 |
| Calcium (mg) | 237 | 344 |
| Phosphorus (mg) | 188 | 244 |
| Magnesium (mg) | 17 | 40 |
| Sodium (mg) | 83 | 102 |
| Potassium (mg) | 284 | 401 |
| Chloride (mg) | 185 | 275 |
| Iodine (mcg) | 31 | 92 |
| Iron (mg) | 2.5 | 3.2 |
| Zinc (mg) | 2.3 | 2.8 |
| Manganese (mcg) | 25 | 47 |
| Copper (mcg) | 55 | 384 |

Tables 13-16 provide examples of embodiments of a powder nutritional composition according to the present disclosure. In these embodiments, the prebiotic comprises at least 20% galactooligosaccharide, polydextrose or a mixture thereof. Further, the carotenoid component may comprise lutein, zeaxanthin, astaxanthin or combinations thereof. Finally, the iron comprises encapsulated iron forms, such as encapsulated ferrous fumarate or encapsulated ferrous sulfate or less reactive iron forms, such as ferric pyrophosphate or ferric orthophosphate. Moreover, the powder nutritional compositions described in Tables 13-16 may be reconstituted with water.

**Table 13. Nutrition profile of an example nutritional composition**

| **Nutrient/Phytonutrient** | **per gram of powder** | |
|---|---|---|
| | **Minimum** | **Maximum** |
| Protein (g) | 0.08 | 0.3 |
| Fat (g) | 0.06 | 0.3 |
| Carbohydrates (g) | 0.3 | 0.9 |
| Prebiotic (g) | 0.01 | 0.05 |
| DHA (mg) | 0.2 | 0.9 |
| Beta glucan (mg) | 0.1 | 0.8 |
| Carotenoids (mg) | 0.4 | 3.8 |
| Polyphenols (i.e. flavan-3-ols) (mg) | 0.4 | 3.8 |
| Apple extract (mg) | 0.7 | 6.3 |
| Grape seed extract (mg) | 0.7 | 6.3 |
| Probiotics (cfu) | 4.20E+04 | 1.70E+07 |
| Vitamin A (IU) | 5.9 | 40 |
| Vitamin D (IU) | 1 | 5.5 |
| Vitamin E (IU) | 0.03 | 0.2 |
| Vitamin K (mcg) | 0.1 | 0.8 |
| Thiamin (mcg) | 2.8 | 14 |
| Riboflavin (mcg) | 3 | 18 |
| Vitamin B6 (mcg) | 2.3 | 17 |
| Vitamin B12 (mcg) | 0.01 | 0.04 |
| Niacin (mcg) | 30 | 256 |
| Folic acid (mcg) | 0.4 | 2.9 |
| Panthothenic acid (mcg) | 10 | 53 |
| Biotin (mcg) | 0.1 | 0.2 |
| Vitamin C (mg) | 0.2 | 1.1 |
| Choline (mg) | 0.2 | 1.9 |
| Calcium (mg) | 3 | 13 |
| Phosphorus (mg) | 2.4 | 9.2 |
| Magnesium (mg) | 0.2 | 1.5 |
| Sodium (mg) | 1 | 3.8 |
| Potassium (mg) | 3.6 | 15 |
| Chloride (mg) | 2.3 | 10 |
| Iodine (mcg) | 0.4 | 3.5 |
| Iron (mg) | 0.03 | 0.1 |
| Zinc (mg) | 0.03 | 0.1 |
| Manganese (mcg) | 0.3 | 1.8 |
| Copper (mcg) | 0.7 | 14 |

**Table 14. Nutrition profile of an example nutritional composition**

| **Nutrient/Phytonutrient** | **per gram of powder** | |
|---|---|---|
| | **Minimum** | **Maximum** |
| Protein (g) | 0.16 | 0.20 |
| Fat (g) | 0.1 | 0.2 |
| Carbohydrates (g) | 0.5 | 0.6 |
| Prebiotic (g) | 0.03 | 0.04 |
| DHA (mg) | 0.4 | 0.6 |
| Beta glucan (mg) | 0.3 | 0.8 |
| Carotenoids (mg) | 0.8 | 2.5 |
| Polyphenols (i.e. flavan-3-ols) (mg) | 0.8 | 2.5 |
| Apple extract (mg) | 1.4 | 4.2 |
| Grape seed extract (mg) | 1.4 | 4.2 |
| Probiotics (cfu) | 1.70E+05 | 4.20E+06 |
| Vitamin A (IU) | 12 | 27 |
| Vitamin D (IU) | 1.9 | 3.7 |
| Vitamin E (IU) | 0.07 | 0.2 |
| Vitamin K (mcg) | 0.3 | 0.5 |
| Thiamin (mcg) | 5.5 | 9.5 |
| Riboflavin (mcg) | 5.9 | 12 |
| Vitamin B6 (mcg) | 4.5 | 12 |
| Vitamin B12 (mcg) | 0.02 | 0.03 |
| Niacin (mcg) | 60 | 171 |
| Folic acid (mcg) | 0.7 | 1.9 |
| Panthothenic acid (mcg) | 20 | 35 |
| Biotin (mcg) | 0.1 | 0.2 |
| Vitamin C (mg) | 0.4 | 0.7 |
| Choline (mg) | 0.4 | 1.3 |
| Calcium (mg) | 5.9 | 8.6 |
| Phosphorus (mg) | 4.7 | 6.1 |
| Magnesium (mg) | 0.4 | 1 |
| Sodium (mg) | 2.1 | 2.6 |
| Potassium (mg) | 7.1 | 10 |
| Chloride (mg) | 4.6 | 6.9 |
| Iodine (mcg) | 0.8 | 2.3 |
| Iron (mg) | 0.06 | 0.08 |
| Zinc (mg) | 0.06 | 0.07 |
| Manganese (mcg) | 0.6 | 1.2 |
| Copper (mcg) | 1.4 | 9.6 |

**Table 15. Nutrition profile of an example nutritional composition**

| **Nutrient/Phytonutrient** | **per gram of powder** | |
|---|---|---|
| | **Minimum** | **Maximum** |
| Protein (g) | 0.08 | 0.3 |
| Fat (g) | 0.06 | 0.3 |
| Carbohydrates (g) | 0.3 | 0.9 |
| Prebiotic (g) | 0.01 | 0.05 |
| DHA (mg) | 0.2 | 0.9 |
| Beta glucan (mg) | 0.1 | 0.8 |
| Carotenoids (mg) | 0.4 | 3.8 |
| Polyphenols (i.e. flavan-3-ols) (mg) | 0.4 | 3.8 |
| Apple extract (mg) | 0.4 - 1.4 | 3.8 - 13 |
| Grape seed extract (mg) | 0.4 - 1.4 | 3.8 - 13 |
| Probiotics (cfu) | 4.20E+04 | 1.70E+07 |
| Vitamin A (IU) | 5.9 | 40 |
| Vitamin D (IU) | 1 | 5.5 |
| Vitamin E (IU) | 0.03 | 0.2 |
| Vitamin K (mcg) | 0.1 | 0.8 |
| Thiamin (mcg) | 2.8 | 14 |
| Riboflavin (mcg) | 3 | 18 |
| Vitamin B6 (mcg) | 2.3 | 17 |
| Vitamin B12 (mcg) | 0.01 | 0.04 |
| Niacin (mcg) | 30 | 256 |
| Folic acid (mcg) | 0.4 | 2.9 |
| Panthothenic acid (mcg) | 10 | 53 |
| Biotin (mcg) | 0.1 | 0.2 |
| Vitamin C (mg) | 0.2 | 1.1 |
| Choline (mg) | 0.2 | 1.9 |
| Calcium (mg) | 3 | 13 |
| Phosphorus (mg) | 2.4 | 9.2 |
| Magnesium (mg) | 0.2 | 1.5 |
| Sodium (mg) | 1 | 3.8 |
| Potassium (mg) | 3.6 | 15 |
| Chloride (mg) | 2.3 | 10 |
| Iodine (mcg) | 0.4 | 3.5 |
| Iron (mg) | 0.03 | 0.1 |
| Zinc (mg) | 0.03 | 0.1 |
| Manganese (mcg) | 0.3 | 1.8 |
| Copper (mcg) | 0.7 | 14 |

**Table 16. Nutrition profile of an example nutritional composition**

| **Nutrient/Phytonutrient** | **per gram of powder** | |
|---|---|---|
| | **Minimum** | **Maximum** |
| Protein (g) | 0.16 | 0.20 |
| Fat (g) | 0.1 | 0.2 |
| Carbohydrates (g) | 0.5 | 0.6 |
| Prebiotic (g) | 0.03 | 0.04 |
| DHA (mg) | 0.4 | 0.6 |
| Beta glucan (mg) | 0.3 | 0.8 |
| Carotenoids (mg) | 0.8 | 2.5 |
| Polyphenols (i.e. flavan-3-ols) (mg) | 0.8 | 2.5 |
| Apple extract (mg) | 0.8 - 2.7 | 2.7 - 8.4 |
| Grape seed extract (mg) | 0.8 - 2.7 | 2.7 - 8.4 |
| Probiotics (cfu) | 1.70E+05 | 4.20E+06 |
| Vitamin A (IU) | 12 | 27 |
| Vitamin D (IU) | 1.9 | 3.7 |
| Vitamin E (IU) | 0.07 | 0.2 |
| Vitamin K (mcg) | 0.3 | 0.5 |
| Thiamin (mcg) | 5.5 | 9.5 |
| Riboflavin (mcg) | 5.9 | 12 |
| Vitamin B6 (mcg) | 4.5 | 12 |
| Vitamin B12 (mcg) | 0.02 | 0.03 |
| Niacin (mcg) | 60 | 171 |
| Folic acid (mcg) | 0.7 | 1.9 |
| Panthothenic acid (mcg) | 20 | 35 |
| Biotin (mcg) | 0.1 | 0.2 |
| Vitamin C (mg) | 0.4 | 0.7 |
| Choline (mg) | 0.4 | 1.3 |
| Calcium (mg) | 5.9 | 8.6 |
| Phosphorus (mg) | 4.7 | 6.1 |
| Magnesium (mg) | 0.4 | 1 |
| Sodium (mg) | 2.1 | 2.6 |
| Potassium (mg) | 7.1 | 10 |
| Chloride (mg) | 4.6 | 6.9 |
| Iodine (mcg) | 0.8 | 2.3 |
| Iron (mg) | 0.06 | 0.08 |
| Zinc (mg) | 0.06 | 0.07 |
| Manganese (mcg) | 0.6 | 1.2 |
| Copper (mcg) | 1.4 | 9.6 |

In some embodiments, the disclosure is directed to a staged nutritional feeding regimen for a pediatric subject, such as an infant or child, which includes a plurality of different nutritional compositions according to the present disclosure. Each nutritional composition comprises a lipid or fat source, a protein source, a carbohydrate source, and a phytonutrient component comprising, variously, flavan-3-ols, flavanones, flavonols, isoflavones, anthocyanins, and/or proanthocyanidins. In certain embodiments, the nutritional compositions of the feeding regimen may also include a source of long chain polyunsaturated fatty acid, at least one prebiotic, an iron source, a source of β-glucan, vitamins or minerals, lutein, zeaxanthin, or any other ingredient described hereinabove. The nutritional compositions described herein may be administered once per day or via several administrations throughout the course of a day.

The nutritional products utilized in the feeding regimen change with the developmental stage of a pediatric subject and are tailored to the level of development of the subject. Moreover, pediatric subjects of different ages may consume different volumes of formula through the course of a day. For example, in some embodiments, an infant may consume between about 750 and about 800 mL of a nutritional composition per day, and in a particular embodiment an infant may consume about 780 mL of a nutritional composition per day. In other embodiments, a child between the ages of about one and twelve years may consume between about 700 and about 750 mL of a nutritional composition per day, and in certain embodiments a child may consume about 710 mL of a nutritional composition per day. Each embodiment of a feeding regimen provided herein allows for administration of at least two different nutritional compositions.

Further disclosed are the following nutritional feeding regimen including the step(s) of:
(a) administering to a pediatric subject that is less than about three months of age a first composition that comprises:
   i. a fat or lipid source;
   ii. a carbohydrate source;
   iii. a protein source; and
   iv. a phytonutrient component selected from the group consisting of
      between about 0.01 and 30 mg flavan-3-ols;
      between about 0.01 and 20 mg flavanones;
      between about 0.01 and 20 mg flavonols;
      between about 0.01 and 20 mg isoflavones;
      between about 0.01 and 50 mg anthocyanins;
      between about 0.01 and 120 mg proanthocyanidins; and
      any mixture thereof,
(b) administering to a pediatric subject between about three and about 12 months of age a second composition that comprises:
   i. a fat or lipid;
   ii. a carbohydrate;
   iii. a protein source; and
   iv. a phytonutrient component selected from the group consisting of
      between about 0.1 and 50 mg flavan-3-ols;
      between about 0.1 and 40 mg flavanones;
      between about 0.1 and 40 mg flavonols;
      between about 0.1 and 40 mg isoflavones;
      between about 0.1 and 70 mg anthocyanins;
      between about 0.1 and 170 mg proanthocyanidins; and
      any mixture thereof,
(c) administering to a pediatric subject between about one and about two years of age a third composition that comprises:
   i. a fat or lipid;
   ii. a carbohydrate;
   iii. a protein source; and
   iv. a phytonutrient component selected from the group consisting of
      between about 0.1 and 150 mg flavan-3-ols;
      between about 0.1 and 60 mg flavanones;
      between about 0.1 and 60 mg flavonols;
      between about 0.1 and 60 mg isoflavones;
      between about 0.1 and 80 mg anthocyanins;
      between about 0.1 and 250 mg proanthocyanidins; and
      any mixture thereof,
(d) administering to a pediatric subject between about two and about three years of age a fourth composition that comprises:
   i. a fat or lipid;
   ii. a carbohydrate;
   iii. a protein source; and
   iv. a phytonutrient component selected from the group consisting of
      between about 0.1 and 225 mg flavan-3-ols;
      between about 0.1 and 130 mg flavanones;
      between about 0.1 and 130 mg flavonols;
      between about 0.1 and 130 mg isoflavones;
      between about 0.1 and 125 mg anthocyanins;
      between about 0.1 and 350 mg proanthocyanidins; and
      any mixture thereof, and/or
(e) administering to a pediatric subject between about three and about twelve years of age a fifth composition that comprises:
   i. a fat or lipid;
   ii. a carbohydrate;
   iii. a protein source; and
   iv. a phytonutrient component selected from the group consisting of
      between about 0.1 and 240 mg flavan-3-ols;
      between about 0.1 and 150 mg flavanones;
      between about 0.1 and 150 mg flavonols;
      between about 0.1 and 150 mg isoflavones;
      between about 0.1 and 150 mg anthocyanins;
      between about 0.1 and 400 mg proanthocyanidins; and
      any mixture thereof.

Further disclosed are the following nutritional feeding regimen including the step(s) of:
(a) administering to a pediatric subject that is less than about three months of age a first composition that comprises:
   i. a fat or lipid source;
   ii. a carbohydrate source;
   iii. a protein source; and
   iv. a phytonutrient component selected from the group consisting of
      between about 3 and 10 mg flavan-3-ols;
      between about 2 and 5 mg flavanones;
      between about 1 and 5 mg flavonols;
      between about 1 and 4 mg isoflavones;
      between about 1 and 5 mg anthocyanins;
      between about 5 and 50 mg proanthocyanidins; and
      any mixture thereof,
(b) administering to a pediatric subject between about three and about 12 months of age a second composition that comprises:
   i. a fat or lipid;
   ii. a carbohydrate;
   iii. a protein source; and
   iv. a phytonutrient component selected from the group consisting of
      between about 5 and 15 mg flavan-3-ols;
      between about 3 and 10 mg flavanones;
      between about 2 and 10 mg flavonols;
      between about 2 and 8 mg isoflavones;
      between about 2 and 10 mg anthocyanins;
      between about 10 and 80 mg proanthocyanidins; and
      any mixture thereof,
(c) administering to a pediatric subject between about one and about two years of age a third composition that comprises:
   i. a fat or lipid;
   ii. a carbohydrate;
   iii. a protein source; and
   iv. a phytonutrient component selected from the group consisting of
      between about 7 and 60 mg flavan-3-ols;
      between about 5 and 20 mg flavanones;
      between about 5 and 20 mg flavonols;
      between about 5 and 16 mg isoflavones;
      between about 4 and 18 mg anthocyanins;
      between about 20 and 120 mg proanthocyanidins; and
      any mixture thereof,
(d) administering to a pediatric subject between about two and about three years of age a fourth composition that comprises:
   i. a fat or lipid;
   ii. a carbohydrate;
   iii. a protein source; and
   iv. a phytonutrient component selected from the group consisting of
      between about 9 and 70 mg flavan-3-ols;
      between about 7 and 30 mg flavanones;
      between about 7 and 30 mg flavonols;
      between about 7 and 20 mg isoflavones;
      between about 6 and 30 mg anthocyanins;
      between about 30 and 175 mg proanthocyanidins; and
      any mixture thereof, and/or
(e) administering to a pediatric subject between about three and about twelve years of age a fifth composition that comprises:
   i. a fat or lipid;
   ii. a carbohydrate;
   iii. a protein source; and
   iv. a phytonutrient component selected from the group consisting of
      between about 10 and 80 mg flavan-3-ols;
      between about 9 and 50 mg flavanones;
      between about 9 and 50 mg flavonols;
      between about 9 and 40 mg isoflavones;
      between about 8 and 50 mg anthocyanins;
      between about 50 and 245 mg proanthocyanidins; and
      any mixture thereof.

Further disclosed are the following nutritional feeding regimen including the step(s) of:
(a) administering to a pediatric subject that is less than about three months of age a first composition that comprises:
   i. a fat or lipid source;
   ii. a carbohydrate source;
   iii. a protein source; and
   iv. a phytonutrient component selected from the group consisting of
      between about 0.01 and 38 mg flavan-3-ols per liter;
      between about 0.01 and 26 mg flavanones per liter;
      between about 0.01 and 26 mg flavonols per liter;
      between about 0.01 and 26 mg isoflavones per liter;
      between about 0.01 and 64 mg anthocyanins per liter;
      between about 0.01 and 154 mg proanthocyanidins per liter; and
      any mixture thereof,
(b) administering to a pediatric subject between about three and about 12 months of age a second composition that comprises:
   i. a fat or lipid;
   ii. a carbohydrate;
   iii. a protein source; and
   iv. a phytonutrient component selected from the group consisting of
      between about 0.1 and 64 mg flavan-3-ols per liter;
      between about 0.1 and 51 mg flavanones per liter;
      between about 0.1 and 51 mg flavonols per liter;
      between about 0.1 and 51 mg isoflavones per liter;
      between about 0.1 and 90 mg anthocyanins per liter;
      between about 0.1 and 218 mg proanthocyanidins per liter; and
      any mixture thereof,
(c) administering to a pediatric subject between about one and about two years of age a third composition that comprises:
   i. a fat or lipid;
   ii. a carbohydrate;
   iii. a protein source; and
   iv. a phytonutrient component selected from the group consisting of
      between about 0.1 and 211 mg flavan-3-ols per liter;
      between about 0.1 and 85 mg flavanones per liter;
      between about 0.1 and 85 mg flavonols per liter;
      between about 0.1 and 85 mg isoflavones per liter;
      between about 0.1 and 113 mg anthocyanins per liter;
      between about 0.1 and 352 mg proanthocyanidins per liter; and
      any mixture thereof,
(d) administering to a pediatric subject between about two and about three years of age a fourth composition that comprises:
   i. a fat or lipid;
   ii. a carbohydrate;
   iii. a protein source; and
   iv. a phytonutrient component selected from the group consisting of
      between about 0.1 and 317 mg flavan-3-ols per liter;
      between about 0.1 and 183 mg flavanones per liter;
      between about 0.1 and 183 mg flavonols per liter;
      between about 0.1 and 183 mg isoflavones per liter;
      between about 0.1 and 176 mg anthocyanins per liter;
      between about 0.1 and 493 mg proanthocyanidins per liter; and
      any mixture thereof, and/or
(e) administering to a pediatric subject between about three and about twelve years of age a fifth composition that comprises:
   i. a fat or lipid;
   ii. a carbohydrate;
   iii. a protein source; and
   iv. a phytonutrient component selected from the group consisting of
      between about 0.1 and 338 mg flavan-3-ols per liter;
      between about 0.1 and 211 mg flavanones per liter;
      between about 0.1 and 211 mg flavonols per liter;
      between about 0.1 and 211 mg isoflavones per liter;
      between about 0.1 and 211 mg anthocyanins per liter;
      between about 0.1 and 564 mg proanthocyanidins per liter; and
      any mixture thereof.

Further disclosed are the following nutritional feeding regimen including the step(s) of:
(a) administering to a pediatric subject that is less than about three months of age a first composition that comprises:
   i. a fat or lipid source;
   ii. a carbohydrate source;
   iii. a protein source; and
   iv. a phytonutrient component selected from the group consisting of
      between about 0.01 and 10 mg flavan-3-ols per liter;
      between about 0.01 and 6 mg flavanones per liter;
      between about 0.01 and 6 mg flavonols per liter;
      between about 0.01 and 5 mg isoflavones per liter;
      between about 0.01 and 6 mg anthocyanins per liter;
      between about 0.01 and 64 mg proanthocyanidins per liter; and
      any mixture thereof,
(b) administering to a pediatric subject between about three and about 12 months of age a second composition that comprises:
   i. a fat or lipid;
   ii. a carbohydrate;
   iii. a protein source; and
   iv. a phytonutrient component selected from the group consisting of
      between about 0.1 and 19 mg flavan-3-ols per liter;
      between about 0.1 and 13 mg flavanones per liter;
      between about 0.1 and 13 mg flavonols per liter;
      between about 0.1 and 10 mg isoflavones per liter;
      between about 0.1 and 13 mg anthocyanins per liter;
      between about 0.1 and 103 mg proanthocyanidins per liter; and
      any mixture thereof,
(c) administering to a pediatric subject between about one and about two years of age a third composition that comprises:
   i. a fat or lipid;
   ii. a carbohydrate;
   iii. a protein source; and
   iv. a phytonutrient component selected from the group consisting of
      between about 0.1 and 85 mg flavan-3-ols per liter;
      between about 0.1 and 28 mg flavanones per liter;
      between about 0.1 and 28 mg flavonols per liter;
      between about 0.1 and 23 mg isoflavones per liter;
      between about 0.1 and 25 mg anthocyanins per liter;
      between about 0.1 and 169 mg proanthocyanidins per liter; and
      any mixture thereof,
(d) administering to a pediatric subject between about two and about three years of age a fourth composition that comprises:
   i. a fat or lipid;
   ii. a carbohydrate;
   iii. a protein source; and
   iv. a phytonutrient component selected from the group consisting of
      between about 0.1 and 99 mg flavan-3-ols per liter;
      between about 0.1 and 42 mg flavanones per liter;
      between about 0.1 and 42 mg flavonols per liter;
      between about 0.1 and 28 mg isoflavones per liter;
      between about 0.1 and 42 mg anthocyanins per liter;
      between about 0.1 and 247 mg proanthocyanidins per liter; and
      any mixture thereof, and/or
(e) administering to a pediatric subject between about three and about twelve years of age a fifth composition that comprises:
   i. a fat or lipid;
   ii. a carbohydrate;
   iii. a protein source; and
   iv. a phytonutrient component selected from the group consisting of
      between about 0.1 and 112 mg flavan-3-ols per liter;
      between about 0.1 and 70 mg flavanones per liter;
      between about 0.1 and 70 mg flavonols per liter;
      between about 0.1 and 56 mg isoflavones per liter;
      between about 0.1 and 70 mg anthocyanin per liter;
      between about 0.1 and 345 mg proanthocyanidins per liter; and
      any mixture thereof.

### Color Mitigation

Another aspect of the present disclosure is to provide phytonutrients via a milk-based nutritional composition while maintaining the acceptable organoleptic properties (i.e. color, flavor, texture) of the milk-based nutritional composition and to teach methods of producing such nutritional compositions having desirable organoleptic properties.

Phytonutrients are generally colored compounds that when added to a nutritional formulation may significantly impact the color or taste of the nutritional formulation. For example, phytonutrients can effectively change the desirable creamy, white color of a milk-based nutritional composition to a purple, brown, gray, orange or even pink hue. These additional hues negatively impact the overall appeal of the nutritional composition.

It is believed that iron-phytonutrient, and, more specifically iron-polyphenol interactions within a nutritional composition cause the development of color complexes. Further, it is believed that the color complexes may be formed in a nutritional composition containing phytonutrients by the reaction of iron in the ferric form with ortho-hydroxy phenolics. These color complexes give milk-based formulas, for example, a red-brown hue that is not acceptable to consumers expecting a creamy-white dairy based product. Moreover, some phytochemicals, such as polyphenols, cause a significant color change due to their affinity to interact with iron and form an intense colored complex.

Accordingly, then, it is an aspect of the present disclosure to provide a method for preventing development of color iron-polyphenol complexes in milk-based nutritional compositions and also to prevent any potential reduction in bioavailability of the polyphenol and the iron therein. The following steps and methods may be applied not only to iron but also to any other bioactive substance in a nutritional composition in order to prevent the development of unwanted color complexes in a milk-based nutritional composition. For instance, the encapsulation technique(s) that follow may be applied to polyphenols and other water-soluble bioactive ingredients.

Another aspect of the disclosure is to provide a nutritional composition containing phytonutrients that can maintain acceptable organoleptic properties throughout the life of the nutritional product, that is, throughout the stages of the composition's shelf life, through reconstitution, dilution or the like. Still another aspect is to preserve the white or cream color of a milk or dairy-based composition while supplementing the composition with phytonutrients, such as polyphenols.

Yet another aspect of the present disclosure is to provide a method to minimize, reduce or eliminate the formation of iron-phytonutrient color complexes in a nutritional composition. Indeed, the present disclosure is directed to several methods for avoiding, minimizing, eliminating and/or reducing the formation of an iron-phytonutrient complex in a nutritional composition containing phytonutrients. As such, the disclosure is also directed to methods for producing a milk or dairy-based nutritional composition that maintains acceptable organoleptic properties, such as a white color and an acceptable taste, upon addition of at least one phytonutrient to the milk or dairy-based nutritional composition. Some of the steps of these respective methods may be taken independently to reduce or eliminate formation of an iron-phytonutrient complex in a nutritional composition, but it is often helpful to combine several of the steps of these various methods together to better prevent formation of color complexes in a milk-based formula.

To reduce or eliminate formation of an iron-phytonutrient complex in a nutritional composition, phytonutrients may be added to an iron-free nutritional composition or to a nutritional composition from which the iron has been removed. If iron is not provided in a nutritional composition, then the iron-phytonutrient complex cannot be formed.

In another embodiment, a chelating agent may be added to a nutritional composition that contains iron in order to reduce or eliminate formation of an iron-phytonutrient complex in a nutritional composition. Chelating agents are known to bind metals. Thus, because the chelating agent will bind to iron, less iron will be available in the nutritional composition to bind with phytonutrients. Accordingly, formation of iron-phytonutrient complexes will be reduced. Examples of chelating agents suitable for use in the nutritional composition of the present disclosure include sodium hexametaphosphate, ehylenediaminetetraacetic acid (EDTA), calcium EDTA, sodium EDTA, potassium citrate, potassium gluconate, sodium citrate, citric acid, malic acid, sodium gluconate, and any mixture thereof.

In another embodiment, an active iron component, such as ferrous sulfate, in a nutritional composition may be replaced with an alternative iron ingredient to reduce or eliminate the likelihood of formation of an iron-phytonutrient complex in a nutritional composition. Indeed, some iron forms are less reactive with phytonutrients than others. Examples of less reactive iron sources include: sodium-iron-EDTA, ferric EDTA, ferric citrate, ferrous citrate, ferrous succinate, ferrous fumarate, ferrous lactate, ferrous gluconate, ferrous ammonium citrate, ferrous fumarate, ferrous carbonate, ferric orthophosphate, ferric pyrophosphate, ferric glycerophosphate, ferric chloride, iron amino acid chelates (e.g. ferrous bisglycinate chelate, ferrous glycine), iron prophyrin, electrolytic iron (ferric or ferrous form), reduced iron, heme iron (pure or from natural animal sources), and other sources of iron known in the art. Preferred iron sources with less reactivity toward phytonutrients, including toward apple and grape seed flavan-3-ols, include but are not limited to ferric pyrophosphate, ferric orthophosphate, and ferrous fumarate.

In an embodiment, a reducing agent may be added to a nutritional composition containing iron in order to keep the iron in a reduced form to reduce or eliminate the formation of an iron-phytonutrient complex in a nutritional composition. Reducing agents such as ascorbic acid or citric acid may help keep iron in a reduced form and may minimize the development of an iron-phytonutrient complex.

In some embodiments, a phytonutrient may be bound to another ingredient during processing to reduce or eliminate the likelihood of formation of an iron-phytonutrient complex in a nutritional composition. For example, a phytonutrient may be bound with whey, sodium caseinate, hydrolyzed casein, amino acids, and the like in order to avoid a reaction with iron.

In an embodiment, either the iron or the phytonutrient ingredient of a nutritional composition may be encapsulated to reduce or eliminate the likelihood of formation of an iron-phytonutrient complex. Moreover, the present disclosure is directed in some embodiments to a method for encapsulating phytonutrients or for encapsulating iron.

Indeed, phytonutrients may be encapsulated in order to mask the color change produced upon the addition of phytonutrient or phytonutrient-rich extract(s) into dairy-based products. Encapsulation is based on creating a water-insoluble barrier between a phytonutrient and other components of a nutritional composition, such as iron, wherein the water-insoluble barrier will remain stable during the life of the product, that is, through at least the phases of storage, reconstitution, and consumption. In some embodiments, a water-insoluble barrier will later disintegrate to release the encapsulated phytonutrient during the digestion process.

Encapsulation involves first providing a mixture in which particles or droplets of active ingredient(s), such as phytonutrients, are surrounded by a coating or are embedded in a polymeric matrix. Next, the mixture is immediately dried (e.g. spray-drying, freeze drying, fluid bed drying, etc) to form a tridimensional network of the polymer as a wall system encapsulating the active ingredient. The mixture for encapsulation can be based on single emulsion, double emulsion, micelle, or liposome structure. Alternatively, an electrostatic layer by layer deposition technique can be applied in order to enhance the barrier.

To mask the color of a phytonutrient in a nutritional composition, the encapsulation process should provide an effective barrier between the phytonutrient and the aqueous matrix of a milk-based nutritional composition and should also provide an effective barrier to protect the phytonutrient from environmental factors.

The efficacy, efficiency, and stability of the encapsulation process are affected by two major factors: the wall material and the encapsulation process. Wall materials are selected based on solubility, molecular weight, glass/melting transition, crystallinity, diffusibility, film forming, and emulsifying properties. Wall materials used in the encapsulation of phytonutrients according to the present disclosure include hydrocolloids, such as gum Arabic, alginates, carrageenan, guar gum, cellulose, pectin, and the like, sugars, such as lactose, glucose syrup, sugar alcohols, and the like, proteins, such as milk proteins, whey, casein, gelatin, soy proteins, and their respective hydrolyzed versions, lipids, such as plant oil, dairy fat, medium chain triglycerides, and other lipids known in the art, carbohydrates, such as inulin, galactooligosaccharides, fructooligosaccharides, maltodextrin of various dextrose equivalence, and their blends. In addition to the wall materials, emulsifiers, such as phospholipids, mono-di-glycerides, lecithin, and other emulsifiers known in the art, and surfactants are typically added to improve the stability of the emulsion.

Examples of anthocyanin microencapsulation are described below.

To prevent anthocyanin solubilization and the resulting absorption of visible light to produce its red/blue color, anthocyanins can be modified at pH 4-6 (depending on the exact composition of the anthocyanin-rich extract) and encapsulated in a water insoluble barrier through the process of microencapsulation. Selection of anthocyanins with a greater percentage of cyanidin 3-glucoside would maximize the colorless response at a pH of about 4.5.

### Encapsulation Example 1

### Preparation of reduced-color intensity anthocyanin preparation

Anthocyanin-rich billbery extract (>25% anthocyanins) is dissolved in distilled water by stirring at 25°C to produce concentration of ranges of about 0.1 to 20 (w/v). Alternatively, liquid extract can be used with or without dilution in water. The pH of anthocyanin-rich extract is generally about 2.5 to 4.0. The pH of the solution is then raised to about 4.5 to 5.5 by addition of alkali (such as sodium hydroxide, potassium hydroxide, sodium carbonate, etc.) and incubated for 30 minutes with stirring to achieve transformation to hemiketals.

### Encapsulation of anthocyanin by double emulsion

The anthocyanin aqueous solution is added into pre-warmed (45-60°C) medium chain triglycerides (MCT) oil in the presence of lipophilic surfactant at ratio of about 1:1 to 1:200. The mixture is homogenized using a high-speed homogenizer to form a primary water-in-oil (W/O) emulsion. The primary emulsion is then mixed with a solution of maltodextrin under medium shear to form a double emulsion (water/oil/water). The resulting double emulsion is then spray dried to form powder encapsulates.

### Encapsulation Example 2

### Preparation of reduced-color intensity anthocyanin preparation

Anthocyanin-rich billbery extract (>25% anthocyanins) is dissolved in distilled water by stirring at about 25°C to produce concentration of ranges about 0.1 to 20 (w/v). Alternatively, liquid extract can be used with or without dilution in water. The pH of anthocyanin-rich extract is generally about 2.5 to 4.0. The pH of the solution is raised to about 4.5 to 5.5 by addition of alkali (sodium hydroxide, potassium hydroxide, sodium carbonate, etc) and incubated for 30 minutes with stirring to achieve transformation to hemiketals.

### Encapsulation of anthocyanin by layer-by-layer deposition technique

The anthocyanin aqueous solution is mixed with pre-warmed MCT oil and phospholipids to achieve a water-to-oil ratio of between about 2:1 and about 1:20. The mixture is then homogenized to form primary water-in-oil emulsion. The primary emulsion is then mixed with a water-soluble negatively-charged emulsifier to produce a double emulsion (water/oil/water) with only a single layer of emulsifier. The double layer at the oil/water interface will be produced by adding positively-charged protein to the double emulsion, followed by homogenization step. Maltodextrin or hydrocolloids are added to the resulting emulsion, homogenized, and spray-dried to produce a microencapsulated powder.

The encapsulation technology described may be modified to produce droplets in the micro and/or nano scale range(s).

An encapsulated phytonutrient may be in the form of a dry-blendable free-flowing powder with reduced color intensity. When added to a nutritional composition, the encapsulated phytonutrient will exhibit insignificant color impact. Likewise, other phytonutrients may be encapsulated in a similar manner in order to minimize any unwanted effect on the organoleptic properties of a nutritional composition. Indeed, encapsulated phytonutrients according to the present disclosure will exhibit insignificant color impact on a nutritional composition both before and after reconstitution. The encapsulation should also provide stability for the phytonutrient against degradation during the shelf life of the product.

Encapsulated phytonutrients or irons for use in the nutritional composition of present disclosure produce a color change that is preferably within ±2 for "L" value, ±4 for "hue" , ±3 for "chroma", and ±2 for "b" value compared to a nutritional formulation without phytonutrients.

Like phytonutrients, iron sources may also be encapsulated to minimize formation of an iron-phytonutrient complex in a nutritional composition. Encapsulation physically prevents iron from interacting with the reactive groups of polyphenols. Likewise, encapsulation may be applied to polyphenols or other water-soluble bioactive ingredients to prevent interaction of reactive groups. For example, iron may be encapsulated with vegetable fats or cellulose. Examples of irons that could be encapsulated and used in the nutritional composition of the present disclosure include but are not limited to: ferrous sulfate, sodium-iron-EDTA, ferric EDTA, ferric citrate, ferrous citrate, ferrous succinate; ferrous fumarate, ferrous lactate, ferrous gluconate, ferrous ammonium citrate, ferrous fumarate, ferrous carbonate, ferric orthophosphate, ferric pyrophosphate, ferric glycerophosphate, ferric chloride, iron amino acid chelates (e.g. ferrous bisglycinate chelate, ferrous glycine), iron prophyrin, electrolytic iron (ferric or ferrous form), reduced iron, heme iron (pure or from natural animal sources), etc.

Moreover, iron or polyphenols may be coated with different lipid (vegetable or animal fat) layers so as to resist dissolution once reconstituted with water. Fats such as palmitic acid, stearic acid, arachidic acid, behenic acid, and lignoceric acid are useful for encapsulation, among others. Generally, lipids with melting points greater than 60°C should preferably be used. Furthermore, size of encapsulated iron or encapsulated phytonutrient particles should be limited to 50 µm or less in order to minimize grittiness and detection of the particles during consumption. Other matrices comprised of combinations of carbohydrate, protein, alginate and lipid may also be used to encapsulate the active ingredients (i.e. phytonutrients and iron).

In some embodiments, iron may be encapsulated within the internal aqueous phase of a water-in-oil-in-water (W/O/W) emulsion, which consists of water droplets dispersed within oil droplets, which are dispersed within an aqueous continuous phase. To date, W/O/W emulsions have had limited success in the commercial food industry due to the tendency of the internal water phase to migrate into the external aqueous phase. (Choi et al., Impact of iron encapsulation within the interior aqueous phase of water-in-oil-in-water emulsions on lipid oxidation, Food Chemistry 116, 271-276 (2009)) The present application provides emulsions having an internal aqueous phase containing a concentrated whey protein isolate and/or a sodium caseinate as an emulsifier, thereby producing W/O/W emulsions that have improved resistance to internal water droplet expulsion and diffusion.

Preparing a W/O/W emulsion according to the present disclosure involves the steps of (i) preparing a stable, primary water-in-oil (W/O) emulsion and (ii) dispersing the primary emulsion into a sodium caseinate and/or whey protein isolate solution, wherein the primary W/O emulsion is added to the sodium caseinate and/or whey protein isolate solution in a ratio of about 1:4 under shear conditions.

Any type of oil or oil blend known in the art may be used for the continuous oil phase in preparation of the primary water-in-oil emulsion. The oil phase of the W/O emulsion is prepared by dispersing a hydrophobic emulsifier, such as polyglycerol polyricinoleate (PGPR), into the continuous oil phase.

Meanwhile, an aqueous phase is prepared by dispersing sodium caseinate and/or whey protein isolate in any solvent known in the art, such as a phosphate buffer, to form a solution. Iron or any other water soluble bioactive can be dissolved in any solution of sodium caseinate and/or whey protein isolate to form the discontinuous phase of the W/O emulsion.

The primary emulsion is then dispersed gradually into the sodium caseinate and/or whey protein isolate solution under agitation, such as agitation with a magnetic stirrer, then blended using a high-speed blender, and finally homogenized via any homogenization method known in the art, such as, for example, via multiple passes through a micro-fluidizer. The W/O emulsion is added to the sodium caseinate and/or whey protein isolate solution in a ratio of 1:4 under high-shear conditions.

Furthermore, use of an encapsulated iron source may (i) prevent or minimize iron-catalyzed lipid oxidation, especially that of polyunsaturated fatty acids, such as DHA, (ii) prevent other iron catalyzed oxidation reactions, such as vitamin degradation, (iii) preserve the antioxidant activity of phytonutrients, and/or (iv) preserve the bioavailability of iron and of any added phytonutrients. Also, encapsulation may allow use of more reactive iron sources, such as ferrous sulfate, in place of less reactive iron sources, such as ferric pyrophosphate.

Another option for avoiding, eliminating or reducing formation of an iron-phytonutrient complex in a nutritional composition includes the step of formulating the nutritional composition to comprise only those phytonutrients that will not react with iron, such as, for example, those lacking an ortho-hydroxy group. Phytonutrients lacking an ortho-hydroxy group include stilbenoids, flavones, and flavanones, resveratrol found in grapes, peanuts, *Polygonum cuspidatum* root, naringenin, hesperidin, and others as known to one of skill in the art.

Any combination of the aforementioned steps or options may be used in a method to avoid or reduce the formation of an iron-phytonutrient complex. For example, an encapsulated form of a reduced-reactivity iron, such as ferric orthophosphate, may be added to a nutritional composition in lieu of an alternate iron source in order to minimize formation of iron-phytonutrient complexes. Indeed, encapsulated reduced iron sources, such as encapsulated ferric orthophosphate, are particularly useful for preventing the formation of iron-phytonutrient complexes.

Moreover, in some embodiments, the nutritional composition of the present disclosure may comprise a combination of green tea, ferric EDTA, sodium hexametaphosphate and ascorbic acid, wherein this combination of ingredients provides a white or cream color. Likewise, in another embodiment, the nutritional composition may comprise green tea, encapsulated ferrous sulfate and sodium hexametaphosphate, which also provide a desirable white or cream color. In other embodiments, the nutritional composition of the present disclosure comprises a combination of apple and grape seed extract, ferric EDTA, sodium hexametaphosphate and ascorbic acid, wherein this combination of ingredients provides a white or cream color. Likewise, in another embodiment, the nutritional composition comprises apple and grape seed extract, encapsulated ferrous sulfate and sodium hexametaphosphate, which also provide a desirable white or cream color.

Furthermore, color changes to a nutritional composition can also be masked via bleaching or addition of other colorants, as one of skill in the art would know.

## Claims

1. A milk-based nutritional composition, comprising per 100 kcal:
(i) between 1g and 7 g of a fat source;
(ii) between 6 g and 22 g of a carbohydrate source;
(iii) between 1g and 7 g of a protein source;
(iv) between 4 mg and 100 mg of a source of long chain polyunsaturated fatty acid, wherein the source of long chain polyunsaturated fatty acid comprises docosahexaenoic acid;
(v) between 4 mg and 45 mg of choline;
(vi) between 0.5 mg and 3 mg of an iron source comprising ferric pyrophosphate, ferric orthophosphate, encapsulated ferrous fumarate, encapsulated ferrous sulfate, or a mixture or combination thereof;
(vii) between 9 mg and 86 mg of a source of polyphenol, wherein the source of polyphenol comprises at least one apple extract and at least one grape seed extract and
(viii) a prebiotic, wherein the total amount of prebiotics are from 1.0 g/L to 10.0 g/L and wherein at least 20% of the prebiotic comprises galacto-oligosaccharide, polydextrose, or a mixture thereof.

2. The milk-based nutritional composition of claim 1, wherein the nutritional composition is in powder form and further wherein the nutritional composition has a particle size that is between 5 µm and 1500 µm.

3. The milk-based nutritional composition of claim 2, wherein the particle size is between 10 µm and 300 µm.

4. The milk-based nutritional composition of claim 1, further comprising:
between 0.3 g and 1.5 g of the prebiotic; between 1x10⁴ and 1x10¹⁰ colony forming units of a probiotic; and between 3 mg and 17 mg of a source of β-glucan.

5. The nutritional composition of claim 1, wherein the iron source consists essentially of ferric pyrophosphate, ferric orthophosphate, encapsulated ferrous fumarate, encapsulated ferrous sulfate, or a mixture or combination thereof.

6. A feeding regimen for a pediatric subject, comprising;
(a) administering to a pediatric subject that is less than three months of age a first composition that comprises the composition of any of claims 1-5 and further comprising
a phytonutrient component selected from the group consisting of
between 0.01 and 30 mg flavan-3-ols;
between 0.01 and 20 mg flavanones;
between 0.01 and 20 mg flavonols;
between 0.01 and 20 mg isoflavones;
between 0.01 and 50 mg anthocyanins;
between 0.01 and 120 mg proanthocyanidins; and
any mixture thereof and
(b) administering to a pediatric subject between three and 12 months of age a second composition that comprises the composition of any of claims 1-5 and further comprising:
a phytonutrient component selected from the group consisting of
between 0.1 and 50 mg flavan-3-ols;
between 0.1 and 40 mg flavanones;
between 0.1 and 40 mg flavonols;
between 0.1 and 40 mg isoflavones;
between 0.1 and 70 mg anthocyanins
between 0.1 and 170 mg proanthocyanidins; and any mixture thereof.

7. The feeding regimen of claim 6 additionally comprising the step of:
(c) administering to a pediatric subject between one and two years of age a third composition that comprises the composition according to any of claims 1-5 and further comprising:
a phytonutrient component selected from the group consisting
of between 0.1 and 150 mg flavan-3-ols;
between 0.1 and 60 mg flavanones;
between 0.1 and 60 mg flavonols;
between 0.1 and 60 mg isoflavones;
between 0.1 and 80 mg anthocyanins;
between 0.1 and 250 mg proanthocyanidins;
and any mixture thereof.

8. The feeding regimen of claim 7 additionally comprising the step of:
(d) administering to a pediatric subject between two and three years of age a fourth composition that comprises the composition according to any of claims 1-5 and further comprising:
a phytonutrient component selected from the group consisting
of between 0.1 and 225 mg flavan-3-ols;
between 0.1 and 130 mg flavanones;
between 0.1 and 130 mg flavonols;
between 0.1 and 130 mg isoflavones;
between 0.1 and 125 mg anthocyanins;
between 0.1 and 350 mg proanthocyanidins;
and any mixture thereof.

9. The feeding regimen of claim 8additionally comprising the step of:
(e) administering to a pediatric subject between three and twelve years of age a fifth composition that comprises the composition according to any of claims 1-5 and further comprising:
a phytonutrient component selected from the group consisting of
between 0.1 and 240 mg flavan-3-ols;
between 0.1 and 150 mg flavanones;
between 0.1 and 150 mg flavonols;
between 0.1 and 150 mg isoflavones;
between 0.1 and 150 mg anthocyanins;
between 0.1 and 400 mg proanthocyanidins; and
any mixture thereof.

## Patentansprüche

1. Ernährungszusammensetzung auf Milchbasis, umfassend je 100 kcal:
(i) zwischen 1 g und 7 g einer Fettquelle;
(ii) zwischen 6 g und 22 g einer Kohlenhydratquelle;
(iii) zwischen 1 g und 7 g einer Proteinquelle;
(iv) zwischen 4 mg und 100 mg einer Quelle für langkettige mehrfach ungesättigte Fettsäure, wobei die Quelle für langkettige mehrfach ungesättigte Fettsäure Docosahexaensäure umfasst;
(v) zwischen 4 mg und 45 mg Cholin;
(vi) zwischen 0,5 mg und 3 mg einer Eisenquelle, die Eisen(III)pyrophosphat, Eisen(III)orthophosphat, eingekapseltes Eisen(II)fumarat, eingekapseltes Eisen(II)sulfat oder ein Gemisch oder eine Kombination davon umfasst;
(vii) zwischen 9 mg und 86 mg einer Polyphenolquelle, wobei die Polyphenolquelle mindestens einen Apfelextrakt und mindestens einen Traubenkernextrakt umfasst, und
(viii) ein Präbiotikum, wobei die Probiotika-Gesamtmenge von 1,0 g/l bis 10,0 g/l reicht und wobei mindestens 20% des Präbiotikums Galacto-Oligosaccharid, Polydextrose oder ein Gemisch davon umfassen.

2. Ernährungszusammensetzung auf Milchbasis nach Anspruch 1, wobei die Ernährungszusammensetzung in Pulverform vorliegt und wobei die Ernährungszusammensetzung ferner eine Teilchengröße zwischen 5 µm und 1500 µm aufweist.

3. Ernährungszusammensetzung auf Milchbasis nach Anspruch 2, wobei die Teilchengröße zwischen 10 µm und 300 µm liegt.

4. Ernährungszusammensetzung auf Milchbasis nach Anspruch 1, zudem umfassend:
zwischen 0,3 g und 1,5 g des Präbiotikums, zwischen 1 x 10⁴ und 1 x 10¹⁰ koloniebildende Einheiten eines Probiotikums und zwischen 3 mg und 17 mg einer Quelle für β-Glucan.

5. Ernährungszusammensetzung auf Milchbasis nach Anspruch 1, wobei die Eisenquelle im Wesentlichen aus Eisen(III)pyrophosphat, Eisen(III)orthophosphat, eingekapseltem Eisen(II)fumarat, eingekapseltem Eisen(II)sulfat, oder einem Gemisch oder einer Kombination davon besteht.

6. Ernährungsschema für ein pädiatrisches Individuum, umfassend
(a) Verabreichen an ein pädiatrisches Individuum, das weniger als drei Monate alt ist, einer ersten Zusammensetzung, die die Zusammensetzung nach einem der Ansprüche 1 bis 5 umfasst und zudem umfasst:
eine Phytonährstoffkomponente, ausgewählt aus der Gruppe bestehend aus
zwischen 0,01 und 30 mg Flavan-3-olen;
zwischen 0,01 und 20 mg Flavanonen;
zwischen 0,01 und 20 mg Flavonolen;
zwischen 0,01 und 20 mg Isoflavonen;
zwischen 0,01 und 50 mg Anthocyaninen;
zwischen 0,01 und 120 mg Proanthocyanidinen; und
jedes Gemisch davon und
(b) Verabreichen an ein pädiatrisches Individuum, das zwischen drei und 12 Monaten alt ist, einer zweiten Zusammensetzung, die die Zusammensetzung nach einem der Ansprüche 1 bis 5 umfasst und zudem umfasst:
eine Phytonährstoffkomponente, ausgewählt aus der Gruppe bestehend aus
zwischen 0,1 und 50 mg Flavan-3-olen;
zwischen 0,1 und 40 mg Flavanonen;
zwischen 0,1 und 40 mg Flavonolen;
zwischen 0,1 und 40 mg Isoflavonen;
zwischen 0,1 und 70 mg Anthocyaninen;
zwischen 0,1 und 170 mg Proanthocyanidinen; und
jedes Gemisch davon.

7. Ernährungsschema nach Anspruch 6, zudem umfassend den Schritt:
(c) Verabreichen an ein pädiatrisches Individuum, das zwischen einem und zwei Jahren alt ist, einer dritten Zusammensetzung, die die Zusammensetzung nach einem der Ansprüche 1 bis 5 umfasst und zudem umfasst:
eine Phytonährstoffkomponente, ausgewählt aus der Gruppe bestehend aus
zwischen 0,1 und 150 mg Flavan-3-olen;
zwischen 0,1 und 60 mg Flavanonen;
zwischen 0,1 und 60 mg Flavonolen;
zwischen 0,1 und 60 mg Isoflavonen;
zwischen 0,1 und 80 mg Anthocyaninen;
zwischen 0,1 und 250 mg Proanthocyanidinen; und
jedes Gemisch davon.

8. Ernährungsschema nach Anspruch 7, zudem umfassend den Schritt:
(d) Verabreichen an ein pädiatrisches Individuum, das zwischen zwei und drei Jahren alt ist, einer vierten Zusammensetzung, die die Zusammensetzung nach einem der Ansprüche 1 bis 5 umfasst und zudem umfasst:
eine Phytonährstoffkomponente, ausgewählt aus der Gruppe bestehend aus
zwischen 0,1 und 225 mg Flavan-3-olen;
zwischen 0,1 und 130 mg Flavanonen;
zwischen 0,1 und 130 mg Flavonolen;
zwischen 0,1 und 130 mg Isoflavonen;
zwischen 0,1 und 125 mg Anthocyaninen;
zwischen 0,1 und 350 mg Proanthocyanidinen; und
jedes Gemisch davon.

9. Ernährungsschema nach Anspruch 8, zudem umfassend den Schritt:
(e) Verabreichen an ein pädiatrisches Individuum, das zwischen drei und zwölf Jahren alt ist, einer fünften Zusammensetzung, die die Zusammensetzung nach einem der Ansprüche 1 bis 5 umfasst und zudem umfasst:
eine Phytonährstoffkomponente, ausgewählt aus der Gruppe bestehend aus
zwischen 0,1 und 240 mg Flavan-3-olen;
zwischen 0,1 und 150 mg Flavanonen;
zwischen 0,1 und 150 mg Flavonolen;
zwischen 0,1 und 150 mg Isoflavonen;
zwischen 0,1 und 150 mg Anthocyaninen;
zwischen 0,1 und 400 mg Proanthocyanidinen; und
jedes Gemisch davon.

## Revendications

1. Composition nutritionnelle à base de lait, comprenant pour 100 kcal :
(i) entre 1 g et 7 g d'une source de matières grasses ;
(ii) entre 6 g et 22 g d'une source de glucides ;
(iii) entre 1 g et 7 g d'une source de protéines ;
(iv) entre 4 mg et 100 mg d'une source d'acides gras polyinsaturés à chaîne longue, la source d'acides gras polyinsaturés à chaîne longue comprenant de l'acide docosahexaénoïque ;
(v) entre 4 mg et 45 mg de choline ;
(vi) entre 0,5 mg et 3 mg d'une source de fer comprenant du pyrophosphate ferrique, de l'orthophosphate ferrique, du fumarate ferreux encapsulé, du sulfate ferreux encapsulé ou un mélange ou une combinaison de ceux-ci ;
(vii) entre 9 mg et 86 mg d'une source de polyphénols, la source de polyphénols comprenant au moins un extrait de pomme et au moins un extrait de graine de raisin, et
(viii) un prébiotique, la quantité totale de prébiotiques étant de 1,0 g/l à 10,0 g/l et au moins 20 % du prébiotique comprenant un galacto-oligosaccharide, du polydextrose ou un mélange de ceux-ci.

2. Composition nutritionnelle à base de lait selon la revendication 1, dans laquelle la composition nutritionnelle est sous la forme de poudre et en outre dans laquelle la composition nutritionnelle a une taille de particule qui est comprise entre 5 µm et 1 500 µm.

3. Composition nutritionnelle à base de lait selon la revendication 2, dans laquelle la taille de particule est comprise entre 10 µm et 300 µm.

4. Composition nutritionnelle à base de lait selon la revendication 1, comprenant en outre :
entre 0,3 g et 1,5 g du prébiotique ; entre 1 x 10⁴ et 1 x 10¹⁰ unités formant colonies d'un probiotique ; et entre 3 mg et 17 mg d'une source de β-glucane.

5. Composition nutritionnelle selon la revendication 1, dans laquelle la source de fer consiste essentiellement en du pyrophosphate ferrique, de l'orthophosphate ferrique, du fumarate ferreux encapsulé, du sulfate ferreux encapsulé ou un mélange ou une combinaison de ceux-ci.

6. Régime d'alimentation pour un sujet pédiatrique, comprenant :
(a) l'administration à un sujet pédiatrique d'un âge de moins de trois mois d'une première composition qui comprend la composition selon l'une quelconque des revendications 1 à 5 et comprend en outre :
un composant phytonutrient choisi dans le groupe constitué par :
entre 0,01 et 30 mg de flavan-3-ols ;
entre 0,01 et 20 mg de flavanones ;
entre 0,01 et 20 mg de flavonols ;
entre 0,01 et 20 mg d'isoflavones ;
entre 0,01 et 50 mg d'anthocyanines ;
entre 0,01 et 120 mg de proanthocyanidines ; et
un mélange quelconque de ceux-ci et
(b) l'administration à un sujet pédiatrique d'un âge compris entre trois et 12 mois d'une deuxième composition qui comprend la composition selon l'une quelconque des revendications 1 à 5 et comprend en outre :
un composant phytonutrient choisi dans le groupe constitué par :
entre 0,1 et 50 mg de flavan-3-ols ;
entre 0,1 et 40 mg de flavanones ;
entre 0,1 et 40 mg de flavonols ;
entre 0,1 et 40 mg d'isoflavones ;
entre 0,1 et 70 mg d'anthocyanines ;
entre 0,1 et 170 mg de proanthocyanidines ; et
un mélange quelconque de ceux-ci.

7. Régime d'alimentation selon la revendication 6, comprenant en outre l'étape suivante :
(c) l'administration à un sujet pédiatrique d'un âge compris entre un et deux ans d'une troisième composition qui comprend la composition selon l'une quelconque des revendications 1 à 5 et comprend en outre :
un composant phytonutrient choisi dans le groupe constitué par :
entre 0,1 et 150 mg de flavan-3-ols ;
entre 0,1 et 60 mg de flavanones ;
entre 0,1 et 60 mg de flavonols ;
entre 0,1 et 60 mg d'isoflavones ;
entre 0,1 et 80 mg d'anthocyanines ;
entre 0,1 et 250 mg de proanthocyanidines ; et
un mélange quelconque de ceux-ci.

8. Régime d'alimentation selon la revendication 7, comprenant en outre l'étape suivante :
(d) l'administration à un sujet pédiatrique d'un âge compris entre deux et trois ans d'une quatrième composition qui comprend la composition selon l'une quelconque des revendications 1 à 5 et comprend en outre :
un composant phytonutrient choisi dans le groupe constitué par :
entre 0,1 et 225 mg de flavan-3-ols ;
entre 0,1 et 130 mg de flavanones ;
entre 0,1 et 130 mg de flavonols ;
entre 0,1 et 130 mg d'isoflavones ;
entre 0,1 et 125 mg d'anthocyanines ;
entre 0,1 et 350 mg de proanthocyanidines ; et
un mélange quelconque de ceux-ci.

9. Régime d'alimentation selon la revendication 8, comprenant en outre l'étape suivante :
(d) l'administration à un sujet pédiatrique d'un âge compris entre trois et douze ans d'une cinquième composition qui comprend la composition selon l'une quelconque des revendications 1 à 5 et comprend en outre :
un composant phytonutrient choisi dans le groupe constitué par :
entre 0,1 et 240 mg de flavan-3-ols ;
entre 0,1 et 150 mg de flavanones ;
entre 0,1 et 150 mg de flavonols ;
entre 0,1 et 150 mg d'isoflavones ;
entre 0,1 et 150 mg d'anthocyanines ;
entre 0,1 et 400 mg de proanthocyanidines ; et
un mélange quelconque de ceux-ci.
